(19) **Europäisches Patentamt / European Patent Office / Office européen des brevets**

(11) **EP 3 228 674 B1**

(12) # EUROPÄISCHE PATENTSCHRIFT

(45) Veröffentlichungstag und Bekanntmachung des Hinweises auf die Patenterteilung:
**06.07.2022   Patentblatt 2022/27**

(21) Anmeldenummer: **17158039.2**

(22) Anmeldetag: **27.02.2017**

(51) Internationale Patentklassifikation (IPC):
*C09J 133/08* (2006.01)   *C09J 7/22* (2018.01)
*C09J 7/26* (2018.01)   *C09J 7/38* (2018.01)
*C08L 7/02* (2006.01)   *C08L 21/00* (2006.01)
*C08L 33/08* (2006.01)   *C08L 57/00* (2006.01)
*B29B 7/42* (2006.01)   *B29B 7/48* (2006.01)
*B29B 7/52* (2006.01)   *B29B 7/72* (2006.01)
*B29B 7/74* (2006.01)   *B29B 7/82* (2006.01)
*B29B 7/86* (2006.01)   *B29B 7/90* (2006.01)

(52) Gemeinsame Patentklassifikation (CPC):
(C-Sets verfügbar)
**C08L 7/02; B29B 7/426; B29B 7/485; B29B 7/487;
B29B 7/526; B29B 7/726; B29B 7/728;
B29B 7/7461; B29B 7/748; B29B 7/826;
B29B 7/86; B29B 7/90; C08L 21/00; C08L 33/08;
C08L 57/00;**                            (Forts.)

(54) **HAFTKLEBMASSE**

ADHESIVE MASS

SUBSTANCE ADHÉSIVE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **07.04.2016   DE 102016205822**

(43) Veröffentlichungstag der Anmeldung:
**11.10.2017   Patentblatt 2017/41**

(73) Patentinhaber: **tesa SE**
**22848 Norderstedt (DE)**

(72) Erfinder:
• **Befuß, Julia**
  **22457 Hamburg (DE)**
• **Lunding, Marta**
  **22844 Norderstedt (DE)**
• **Prenzel, Alexander**
  **22529 Hamburg (DE)**
• **Schubert, Thomas**
  **22850 Norderstedt (DE)**

(74) Vertreter: **tesa SE**
**Hugo-Kirchberg-Straße 1**
**22848 Norderstedt (DE)**

(56) Entgegenhaltungen:
**EP-A1- 2 735 595     EP-A1- 3 178 856**

• **RUDOF RIESEN ET AL: "Die
Glasübergangtemperatur gemessen mit
verschiedenen TA-Techniken, Teil 2: Ermittlung
der Glasübergangstemperaturen", INTERNET
CITATION, 1 February 2003 (2003-02-01), pages
1-20, XP002594785, Retrieved from the Internet:
URL:http://de.mt.com/global/de/home/suppor
tive_content/usercom/TA_UserCom18.z2vUzxjP
y0vKAxrVCMLHBfbHCl45nZa0nG--.MediaFileCo
mp onent.html/tauserc18d.pdf [retrieved on
2010-08-02]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
**C09J 7/22; C09J 7/26; C09J 7/38; C09J 133/08;**
C09J 2301/302; C09J 2400/243; C09J 2433/00;
C09J 2433/006; C09J 2453/00

C-Sets
**C09J 133/08, C08L 7/02, C08L 33/08;**
**C09J 133/08, C08L 21/00, C08L 57/00;**
C09J 2433/00, C09J 2453/00

## Beschreibung

Die Erfindung betrifft das technische Gebiet der Haftklebmassen, wie sie in ein- und doppelseitig klebenden Klebebändern verwendet werden. Spezifischer betrifft die Erfindung eine Haftklebmasse auf Basis einer Kombination mindestens eines Poly(meth)acrylats, das auf einer bestimmten Monomerenzusammensetzung beruht, mit mindestens einem Synthesekautschuk.

Die Erfindung zielt unter anderem auf den klebtechnisch relevanten Parameter "Benetzung" ab. Darunter wird im Folgenden die Ausbildung einer Grenzfläche zwischen einer Haftklebmasse und dem zu verklebenden Substrat verstanden. Der Begriff "Benetzung" beschreibt somit das Vermögen einer Haftklebmasse, Unebenheiten auszugleichen und Luft zwischen sich und dem Substrat zu verdrängen. Je stärker die Benetzung ist, desto besser können sich die Wechselwirkungen zwischen Haftklebmasse und Substrat ausbilden und desto besser werden die Haftung und die Adhäsion. Häufig wird beobachtet, dass insbesondere auf rauen Oberflächen bzw. Oberflächen, die herstellungsbedingt Unebenheiten oder Krümmungen aufweisen oder gewellt sind, durch mechanische Belastungen eine einmal erreichte Benetzung wieder schwächer wird, also eine Entnetzung stattfindet.

Die Benetzung ist vom Klebkraftaufbau über die Zeit zu unterscheiden. Auch bei einer guten anfänglichen Benetzung kann die Klebkraft mit der Zeit noch ansteigen, da sich immer mehr im Klebstoff enthaltene funktionelle Gruppen, die mit der Oberfläche wechselwirken können, zu dieser hin orientieren.

Für diverse Anwendungsgebiete, wie beispielsweise im Bausektor, in der industriellen Fertigung von technischen Produkten oder für Montagezwecke, werden zunehmend dicke, aber stark klebende Klebebänder (so genannte "Montageklebebänder") benötigt. Da die Verklebungen häufig im Außenbereich stattfinden bzw. die verklebten Produkte den äußeren Witterungseinflüssen ausgesetzt sind, sind die Erwartungen an die Eigenschaften derartiger Klebebänder häufig hoch. So soll die Verklebung stark, dauerhaft und witterungsbeständig sein; gefordert wird vielfach eine hohe Feuchtigkeits-, Wärme- und Feuchtwärmebeständigkeit. Weiterhin sollen die Klebebänder schnell benetzen und dabei Unebenheiten in der Verklebungsfuge bzw. auf den zu verklebenden Untergründen ausgleichen und von Anfang an hohe Klebkräfte (Initialklebkräfte) aufweisen. Bei der Verwendung von ungeschäumten Klebebändern ergibt sich durch eine gute Benetzung zusätzlich der Vorteil, dass die Verklebung von transparenten Materialien ohne optische Defekte ermöglicht wird, was zunehmend auch für dicke Klebebänder gewünscht wird (etwa bei der Verklebung von transparenten Materialien wie Gläsern oder Transparenz-Kunststoffen).

Die Klebebänder, die für derartige Zwecke eingesetzt werden, sind für gewöhnlich mit Klebmassen ausgerüstet, bei denen die klebtechnischen Eigenschaften sehr gut aufeinander abgestimmt sein müssen. So müssen Kohäsion, Anfassklebrigkeit (auch als "Tack" bezeichnet), Fließverhalten und andere Eigenschaften sehr genau justiert werden. Da die technischen Ausformungen der Haftklebmasse, die diese Eigenschaften beeinflussen, häufig gegenläufige Auswirkungen auf die einzelnen Eigenschaften haben, ist die Abstimmung in der Regel schwierig, oder es müssen Kompromisse im Ergebnis hingenommen werden.

Insbesondere für sehr dicke Klebebänder ist es zudem häufig schwierig, sehr homogene Klebebänder zu realisieren; verarbeitungsbedingt sind sehr dicke Klebebänder häufig durch die Schicht hindurch nicht homogen. Dies ist meistens unerwünscht, da häufig Klebebänder benötigt werden, die unabhängig von ihrer Schichtdicke und von der Herstellung wohldefinierte Eigenschaften aufweisen.

Stoffe mit für Haftklebeanwendungen geeigneten viskoelastischen Eigenschaften zeichnen sich dadurch aus, dass sie bei mechanischer Deformation sowohl viskos fließen als auch elastische Rückstellkräfte aufbauen. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des zu betrachtenden Stoffes als auch von der Geschwindigkeit und Dauer der Deformation sowie von der Temperatur. Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Aufließen auf das zu verklebende Substrat. Ein hoher Anteil an viskosem Fluss führt zu einer hohen Eigenklebrigkeit (auch als Haftklebrigkeit oder als Tack bezeichnet) und damit oft auch zu einer hohen Klebkraft. Stark vernetzte Systeme, kristalline oder glasartig erstarrte Polymere sind mangels fließfähiger Anteile in der Regel nicht eigenklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

In geschäumten, mehrschichtigen Klebebändern kann es bei einer Dauerbelastung zu einer ungleichmäßigen Spannungsverteilung kommen, die sich, sofern die Kräfte größer als die Adhäsion der Haftklebemasseschicht zur Oberfläche sind, in einem partiellen Ablösen der Haftklebemasseschicht äußern. Der Anteil der benetzten Fläche wird somit geringer.

Um ein Abfließen (ein Herunterlaufen) der Haftklebmassen vom Substrat zu verhindern und eine genügende Stabilität der Haftklebmasse im Klebeverbund zu garantieren, ist also eine hinreichende Kohäsion der Haftklebmassen erforderlich. Für gute Adhäsionseigenschaften müssen die Haftklebmassen aber andererseits in der Lage sein, auf das Substrat aufzufließen, genügend Wechselwirkungen mit der Oberfläche in der Grenzschicht auszubilden und eine gute und dauerhafte Benetzung der Substratoberfläche zu garantieren. Um Brüche innerhalb der Verklebungsfuge (innerhalb der Haftklebmassenschicht) zu vermeiden, ist zudem eine gewisse Elastizität der Haftklebmasse erforderlich.

Um eine hinreichende Kohäsion der Haftklebmassen zu erreichen, werden diese in der Regel vernetzt, das heißt einzelne Makromoleküle werden durch Brückenbindungen miteinander verknüpft. Die Vernetzung kann auf unterschiedliche Weisen geschehen, es gibt beispielsweise physikalische und chemische (thermische) Vernetzungsmethoden. Zur Herstellung homogener Klebebänder ist es von Vorteil, die Polymere thermisch zu vernetzen: Es ist ohne weiteres möglich, auch dicke Schichten gleichmäßig mit thermischer Energie zu versorgen. Masseschichten, die durch aktinische Strahlung (beispielsweise ultraviolette Strahlung, Elektronenstrahlen) vernetzt wurden, zeigen hingegen ein Vernetzungsprofil durch die vernetzte Schicht hindurch. Dieses Vernetzungsprofil resultiert daraus, dass die Strahlen nur eine begrenzte Eindringtiefe in die Schicht hinein besitzen, wobei die Intensität der Strahlung zudem mit der Eindringtiefe aufgrund von Absorptionsprozessen abnimmt. Daher sind die außenliegenden Bereiche einer strahlenchemisch vernetzten Masseschicht stärker vernetzt als die weiter innen liegenden Bereiche, wobei die Vernetzungsintensität insgesamt nach innen abnimmt. Insbesondere für dicke Schichten ist dieser Effekt sehr signifikant.

So beschreiben EP 2 305 389 A2 und EP 2 617 789 A1 thermisch vernetzte, geschäumte und ungeschäumte Montageklebebänder mit guten adhäsiven und kohäsiven Eigenschaften. Jedoch zeigen diese Klebebänder ein vergleichsweise schlechtes Benetzungsverhalten und zusätzlich auch Schwächen hinsichtlich der Verklebung auf unpolaren Untergründen, insbesondere auf Autolacken.

WO 2014/081 623 A2 beschreibt UV-vernetzte, mehrschichtige Montageklebebänder mit sehr guten Verklebungsfestigkeiten auf Autolacken. Dies wird durch die Verwendung von 2-Propylheptylacrylat (PHA) als Comonomer in der äußeren Haftklebmasseschicht erreicht, wobei als bevorzugte Comonomerzusammensetzungen Mischungen aus PHA und einem weiteren Comonomer mit ethylenisch ungesättigter Gruppe beschrieben werden. Bei letzterem handelt es sich insbesondere um (Meth)Acrylate mit verzweigten, cyclischen oder aromatischen Alkoholkomponenten, beispielsweise mit Isobornylacrylat (IBOA), einem Acrylsäureester mit hoher Glasübergangstemperatur des Homopolymeren und einem bicyclischen Rest.

US 2011/0244230 A1 beschreibt ein Acrylat-basiertes Schaumklebeband, welches besonders anschmiegsam ist und sich gut eignet, um auf unebenen Substraten verklebt zu werden. Allerdings sind die beschriebenen Klebebänder mittels UV-Strahlung vernetzt, so dass der resultierende Vernetzungsgradient zu einem schlechteren Benetzungsverhalten führt.

EP 2 690 147 A2 beschreibt auf Styrolblockcopolymeren basierende Haftklebmassen, die in Kombination mit thermisch vernetzten, syntaktischen Polyacrylatschäumen hervorragende Eigenschaften hinsichtlich der Verklebung auf insbesondere unpolaren Substraten zeigen. Die beschriebenen Haftklebmassen weisen eine hohe Elastizität auf. Sie sind daher zur Verklebung auf Oberflächen, die herstellungsbedingte Unebenheiten aufweisen, gewellt sind oder eine Krümmung aufweisen, wenig geeignet. Es ist zu erwarten, dass bei diesen Klebmassen die Benetzung durch mechanische Belastungen mit der Zeit abnimmt, also eine Entnetzung stattfindet.

Die EP 2 474 587 A1 beschreibt Haftklebebänder umfassend einen geschäumten Polyacrylträger sowie mindestens eine äußere Haftklebemasseschicht, die ein Blend aus einem Styrolblockcopolymer und einem Polyacrylat ist. Es werden zugesetzte Klebharze beschrieben, die insbesondere in den Styrolblockcopolymerdomänen löslich sind. Gemäß den Beispielen sind Polyacrylate vorteilhaft, die mittels UV-Polymerisation hergestellt werden und die insbesondere aus Acrylsäure, Butyl- Ethyl-, Isooctyl- und 2-Ethylhexylacrylat bestehen. Diese Blendformulierungen lassen erwarten, dass aufgrund der Steifigkeit der Haftklebmasseschicht die sofortige Benetzung relativ gering ausgeprägt ist.

EP 3 178 856 A1 beschreibt eine Zusammensetzung, die

a) mindestens ein vernetzbares Poly(meth)acrylat;
b) mindestens ein Organosilan entsprechend der Formel (1)

$$R^1\text{-}Si(OR^2)_n R^3_m \qquad (1),$$

worin $R^1$ für einen eine cyclische Etherfunktion enthaltenden Rest,
die Reste $R^2$ unabhängig voneinander jeweils für einen Alkyl- oder Acylrest,
$R^3$ für eine Hydroxygruppe oder einen Alkylrest,
n für 2 oder 3 und m für die sich aus 3 - n ergebende Zahl stehen; und

c) mindestens eine die Reaktion des vernetzbaren Poly(meth)acrylats mit den cyclischen Etherfunktionen beschleunigende Substanz

enthält. Diese Zusammensetzung ist aus der Schmelze verarbeitbar, thermisch vernetzbar, zeichnet sich durch lange Topfzeit und eine schnelle und vollständige Vernetzbarkeit auch bei niedrigen Temperaturen aus und kann zu einer Haftklebmasse verarbeitet werden.

WO 2014/081623 A2 hat einen mehrschichtigen Haftkleber-Aufbau zum Gegenstand, der mindestens eine Haftklebmasseschicht und eine polymere Schaumschicht umfasst. Die Haftklebmasseschicht umfasst eine Haftklebmasse-Zusammensetzung, die ein Reaktionsprodukt eines polymeren Materials umfassend

a) 2-Propylheptylacrylat als ein erstes Monomer und
b) optional ein zweites Monomer mit einer ethylenisch ungesättigten Gruppe umfasst.

Aufgabe der Erfindung ist es, leistungsstarke Haftklebmassen, insbesondere für stark klebende doppelseitige Haftklebebänder, anzubieten. Die Haftklebmassen sollen Oberflächen mit unterschiedlichen Oberflächenenergien, z.B. Metalle, Kunststoffoberflächen wie PP, PE, Polycarbonat sowie Automobillacke, schnell benetzen und dabei eine hohe Adhäsion aufbauen. Weiterhin sollen die Haftklebmassen bzw. die damit hergestellten Verklebungen eine gute Scherfestigkeit auch bei erhöhten Temperaturen, eine hohe Feuchtwärmebeständigkeit sowie eine hohe Verklebungsfestigkeit bei dynamischer Belastung, letzteres insbesondere bei niedrigen Temperaturen, aufweisen. Schließlich soll eine dauerhafte mechanische Belastung der Verklebung nicht zu einer Entnetzung des Klebebandes von der Oberfläche führen.

Der Lösung der Aufgabe liegt der Gedanke zugrunde, als eine Hauptkomponente der Haftklebmasse ein Poly(meth)acrylat einzusetzen, das wesentlich auf einer Mischung aus Monomeren mit einfach verzweigten und unverzweigten Alkoholkomponenten beruht, und dieses Polymer mit einem Synthesekautschuk zu kombinieren.

Ein erster und allgemeiner Gegenstand der Erfindung ist eine Haftklebmasse, die

a) zu mindestens 50 Gew.-%, bezogen auf das Gesamtgewicht der Haftklebmasse, mindestens ein Polymer A, dessen Monomerbasis die folgenden Monomere umfasst:

a1) 2-Propylheptylacrylat und/oder Isodecylacrylat;
a2) mindestens einen (Meth)Acrylsäureester, dessen Alkoholkomponente ein linearer $C_1$-$C_{18}$-Alkohol zugrundeliegt;
a3) Acrylsäure;

b) zu mindestens 5 Gew.-%, bezogen auf das Gesamtgewicht der Haftklebmasse, mindestens einen Synthesekautschuk; und
c) zu mindestens 10 Gew.-%, bezogen auf das Gesamtgewicht der Haftklebmasse, mindestens ein klebkraftverstärkendes Harz enthält.

Eine erfindungsgemäße Haftklebmasse zeichnet sich insbesondere durch eine schnelle Benetzung niedrigenergetischer Oberflächen und hohe Entnetzungsresistenz auch bei anhaltender mechanischer Belastung der Verklebung sowie durch gute sonstige klebtechnische Eigenschaften aus.

Unter einer Haftklebmasse wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physika lisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: G' = $(\tau/\gamma) \cdot \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: G" = $(\tau/\gamma) \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von $10^0$ bis $10^1$ rad/sec G' zumindest zum Teil im Bereich von $10^3$ bis $10^7$ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10° bis einschließlich $10^1$ rad/sec (Abszisse) sowie den Bereich der G'-Werte von einschließlich $10^3$ bis einschließlich $10^7$ Pa (Ordinate) aufgespannt wird. Für G" gilt dies entsprechend.

Der Begriff "(Meth)Acrylsäureester" wird entsprechend der allgemeinen Auffassung so verstanden, dass darunter sowohl Acrylsäureester als auch Methacrylsäureester subsummiert werden. Entsprechendes gilt für die Bezeichnung "(Meth)acrylat".

Bevorzugt ist die erfindungsgemäße Haftklebmasse unter Einsatz mindestens eines Epoxycyclohexylderivats in Abwesenheit von Protonenakzeptoren, Elektronenpaardonatoren und Elektronenpaarakzeptoren thermisch vernetzt. Eine thermische Vernetzung bewirkt eine vorteilhafte homogene Vernetzung durch die gesamte Masseschicht hindurch, während beispielsweise bei strahlungsvernetzten Massen ein Vernetzungsprofil mit zum Inneren der Masse hin abnehmender Vernetzungsdichte beobachtet wird. Eine homogen vernetzte Haftklebmasseschicht ermöglicht die gleichmäßige Verteilung von Spannungen, wie sie bei einer Belastung der Verklebung auftreten können. Adhäsive und kohäsive Eigenschaften lassen sich für die gesamte Schicht sehr exakt balancieren, so dass belastbare Verklebungen mit exakt vorhersagbarem Eigenschaftsprofil erhalten werden können. Besonders bevorzugt ist die erfindungsgemäße Haftklebmasse unter Einsatz mindestens eines Epoxycyclohexylderivats in Abwesenheit jeglicher Vernetzungsbeschleuniger thermisch vernetzt.

Bevorzugt weist das Polymer A ein gewichtsmittleres Molekulargewicht $M_w$ von mindestens 500.000 g/mol, besonders bevorzugt von mindestens 700.000 g/mol auf. Ebenfalls bevorzugt weist das Polymer A ein gewichtsmittleres Molekulargewicht $M_w$ von maximal 1.700.000 g/mol auf. Die Polydispersität PD, also die Breite der Molmassenverteilung, die als Quotient des gewichtsmittleren Molekulargewichts $M_w$ und des zahlenmittleren Molekulargewichts $M_n$ ermittelt wird, beträgt für das Polymer A bevorzugt $10 \leq PD \leq 100$, besonders bevorzugt $20 \leq PD \leq 80$.

Die erfindungsgemäße Haftklebmasse enthält ferner mindestens einen Synthesekautschuk. Erfindungsgemäß ist der Synthesekautschuk bzw. sind Synthesekautschuke in der Haftklebmasse zu mindestens 5 Gew.-%, stärker bevorzugt zu 5 bis 30 Gew.-%, bezogen auf das Gesamtgewicht der Haftklebmasse, enthalten. Besonders bevorzugt enthält die Haftklebmasse zu 7,5 bis 25 Gew.-%, insbesondere zu 10 bis 22,5 Gew.-%, jeweils bezogen auf das Gesamtgewicht der Haftklebmasse, mindestens einen Synthesekautschuk. Sofern mehrere Synthesekautschuke in der erfindungsgemäßen Haftklebmasse enthalten sind, gelten die vorgenannten Gewichtsanteile für die Gesamtheit dieser Synthesekautschuke.

Das Gewichtsverhältnis von Polyacrylaten A zu Synthesekautschuken in der erfindungsgemäßen Haftklebmasse beträgt bevorzugt 2 : 1 bis 15 : 1, stärker bevorzugt 2,2 : 1 bis 9,5 : 1, insbesondere 2,5 : 1 bis 7 : 1.

Bevorzugt ist mindestens ein Synthesekautschuk der erfindungsgemäßen Haftklebmasse ein Blockcopolymer mit einem Aufbau A-B, A-B-A, $(A-B)_n$, $(A-B)_nX$ oder $(A-B-A)_nX$, worin

- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl $\geq 2$ stehen.

Insbesondere sind alle Synthesekautschuke der erfindungsgemäßen Haftklebmasse Blockcopolymere mit einem Aufbau wie vorstehend dargelegt. Die erfindungsgemäße Haftklebmasse kann somit auch Gemische verschiedener Blockcopolymere mit einem Aufbau wie vorstehend enthalten.

Bevorzugte Blockcopolymere (Vinylaromatenblockcopolymere) umfassen also einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Haftklebemasse ein Blockcopolymer mit einem Aufbau A-B, A-B-A, $(A-B)_3X$ oder $(A-B)_4X$, wobei für A, B und X die vorstehenden Bedeutungen gelten. Ganz besonders bevorzugt sind alle Synthesekautschuke der erfindungsgemäßen Haftklebemasse Blockcopolymere mit einem Aufbau A-B, A-B-A, $(A-B)_3X$ oder $(A-B)_4X$, wobei für A, B und X die vorstehenden Bedeutungen gelten. Insbesondere ist der Synthesekautschuk der erfindungsgemäßen Haftklebemasse ein Gemisch aus Blockcopolymeren mit einem Aufbau A-B, A-B-A, $(A-B)_3X$ oder $(A-B)_4X$, das bevorzugt mindestens Diblockcopolymere A-B und/oder Triblockcopolymere A-B-A enthält.

Der Block A ist generell ein glasartiger Block mit einer bevorzugten Glasübergangstemperatur (Tg), die oberhalb der Raumtemperatur liegt. Besonders bevorzugt liegt die Tg des glasartigen Blockes bei mindestens 40 °C, insbesondere bei mindestens 60 °C, ganz besonders bevorzugt bei mindestens 80 °C und äußerst bevorzugt bei mindestens 100 °C. Der Anteil an Vinylaromatenblöcken A an den gesamten Blockcopolymeren beträgt bevorzugt 10 bis 40 Gew.-%, besonders bevorzugt 15 bis 33 Gew.-%. Vinylaromaten zum Aufbau des Blocks A umfassen bevorzugt Styrol, α-Methylstyrol und/oder andere StyrolDerivate. Der Block A kann somit als Homo- oder Copolymer vorliegen. Besonders bevorzugt ist der Block A ein Polystyrol.

Das Vinylaromatenblockcopolymer weist weiterhin generell einen gummiartigen Block B bzw. Weichblock mit einer bevorzugten Tg von kleiner als Raumtemperatur auf. Die Tg des Weichblocks ist besonders bevorzugt kleiner als 0 °C, insbesondere kleiner als -10 °C, beispielsweise kleiner als -40 °C und ganz besonders bevorzugt kleiner als -60 °C.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien, Dimethylbutadien und den Farnesen-Isomeren sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Die erfindungsgemäße Haftklebmasse enthält ferner mindestens ein klebkraftverstärkendes Harz.

Das klebkraftverstärkende Harz ist bevorzugt ein mit dem/den Synthesekautschuk(en) verträgliches Kohlenwasserstoffharz. Unter "verträglich" ist zu verstehen, dass das Harz sich auf molekularer Ebene in dem jeweiligen Polymer löst und keine Domänen ausbildet, so dass nur eine Mischglasübergangstemperatur aus der Glasübergangstemperatur des Polymers und der des Harzes resultiert. Das mit dem/den Synthesekautschuk(en) verträgliche Kohlenwasserstoffharz ist bevorzugt ausgewählt aus der Gruppe bestehend aus hydrierten Polymerisaten des Dicyclopentadiens; nicht, partiell, selektiv oder vollständig hydrierten Kohlenwasserstoffharzen auf Basis von C5-, C5/C9- oder C9-Monomeren; und Polyterpenharzen auf Basis von α-Pinen und/oder von β-Pinen und/oder von δ-Limonen sowie aus Gemischen der vorstehenden Kohlenwasserstoffharze. Die mit dem/den Synthesekautschuk(en) verträglichen Kohlenwasserstoffharze sind bevorzugt nicht mit den Polyacrylaten der erfindungsgemäßen Haftklebmasse verträglich. Der aromatische Anteil sollte daher nicht zu hoch liegen. Die Poly(meth)acrylatphase(n) der erfindungsgemäßen Haftklebmasse sind somit bevorzugt frei von klebkraftverstärkenden Harzen.

Das mit dem Synthesekautschuk verträgliche Kohlenwasserstoffharz der erfindungsgemäßen Haftklebmasse weist bevorzugt einen DACP-Wert von mindestens 0 °C, sehr bevorzugt von mindestens 20 °C, und/oder bevorzugt einen MMAP-Wert von mindestens 40 °C, sehr bevorzugt von mindestens 60 °C, auf. Zur Bestimmung von MMAPund DACP-Werten wird auf C. Donker, PSTC Annual Technical Seminar, Proceedings, S. 149-164, Mai 2001, verwiesen.

Sofern mehrere mit dem Synthesekautschuk verträgliche Kohlenwasserstoffharze in der erfindungsgemäßen Haftklebmasse enthalten sind, gelten die vorstehenden Angaben bevorzugt für alle in der erfindungsgemäßen Haftklebmasse enthaltenen, mit dem Synthesekautschuk verträglichen Kohlenwasserstoffharze.

Mit dem/den Synthesekautschuk(en) verträgliche Kohlenwasserstoffharze sind in der erfindungsgemäßen Haftklebmasse bevorzugt zu insgesamt 10 bis 30 Gew.-%, besonders bevorzugt zu insgesamt 15 bis 25 Gew.-%, bezogen auf das Gesamtgewicht der Haftklebmasse, enthalten.

Ein weiterer Gegenstand der Erfindung ist ein Klebeband, das einen geschäumten Träger und eine erfindungsgemäße Haftklebmasse umfasst. Bevorzugt weist der geschäumte Träger einen syntaktischen Polymerschaum auf. Der Begriff "syntaktischer Schaum" beschreibt eine Sonderform eines geschlossenzelligen Schaumes, dessen Hohlräume durch Glashohlkugeln, keramische Hohlkugeln und/oder Polymerhohlkugeln gebildet werden.

Auf der Rückseite der syntaktischen Polymerschaumschicht kann zur Stabilisierung bzw. zur Abdeckung beispielsweise ein Liner oder ein herkömmliches Folienmaterial vorgesehen sein, so dass mindestens ein Dreischicht-System, umfassend das erfindungsgemäße, mindestens zweischichtige Klebeband, vorliegt.

Bei hinreichend dicken Polymerschaumschichten kann die der Haftklebmassenschicht abgewandte, in Zweischichtsystemen freiliegende Seite der Polymerschaumschicht auch dadurch stabilisiert sein, dass sie durch einen Vernetzungsprozess mit einer geringen Eindringtiefe stark vernetzt wird, so dass nur ein Teil der Schaumträgerschicht stark vernetzt wird, während auf der anderen, der Haftklebmassenschicht zugewandten Seite des Trägers die ursprünglich vorhandenen viskoelastischen Eigenschaften erhalten bleiben.

Besonders bevorzugt ist auf beiden Seiten des geschäumten Trägers eine Haftklebmasse angeordnet, wobei eine der Haftklebmassen eine erfindungsgemäße Haftklebmasse ist. Insbesondere ist auf beiden Seiten des geschäumten Trägers eine erfindungsgemäße Haftklebmasse angeordnet. Dies ist vorteilhaft, weil in diesem Fall beide Seiten des Klebebandes die vorteilhaften klebtechnischen Eigenschaften der erfindungsgemäßen Haftklebmasse aufweisen.

In einer speziellen Ausführungsform ist auf beiden Seiten des geschäumten Trägers eine Haftklebmasse angeordnet, und die beiden Haftklebmassen enthalten identische Zusätze in identischer Konzentration, insbesondere funktionelle Zusätze und/oder Füllstoffe. Ebenso können beide Haftklebmassen auch frei von funktionellen Zusätzen und/oder Füllstoffen sein. In einer besonderen Ausführungsform ist auf beiden Seiten des geschäumten Trägers eine Haftklebmasse, insbesondere eine erfindungsgemäße Haftklebmasse, angeordnet, und die Haftklebmassen sind chemisch, physikalisch und/oder in ihren Ausmaßen identisch. Insbesondere sind beide Haftklebmassen vollständig identisch, wobei unwesentliche Nichtübereinstimmungen, wie sie beispielsweise aus Verunreinigungen im Rahmen der Allgegenwartskonzentration, aus produktionsbedingten Ungenauigkeiten und ähnlichen sonstigen Quellen resultieren können, unbeachtlich sind.

Der geschäumte Träger enthält bevorzugt zu mindestens 50 Gew.-%, bezogen auf das Gesamtgewicht des Schaums, mindestens ein Polymer ausgewählt aus der Gruppe bestehend aus Kautschuken, insbesondere Naturkautschuken, Polyurethanen, Poly(meth)acrylaten und Styrolblockcopolymeren sowie Blends der genannten Polymere. Besonders bevorzugt enthält der geschäumte Träger zu mindestens 50 Gew.-%, bezogen auf das Gesamtgewicht des Schaums, ein oder mehrere Poly(meth)acrylate.

Insbesondere enthält der geschäumte Träger zu mindestens 50 Gew.-%, bezogen auf das Gesamtgewicht des Schaums, mindestens ein Poly(meth)acrylat B, das auf die folgende Monomerzusammensetzung zurückgeführt werden kann:

b1) 65 bis 97 Gew.-% Ethylhexylacrylat und/oder Butylacrylat,
b2) 0 bis 30 Gew.-% Methylacrylat,
b3) 3 bis 15 Gew.-% Acrylsäure.

Bevorzugt weist bzw. weisen die im geschäumten Träger enthaltenen Polymere, besonders bevorzugt das Polymer B, ein gewichtsmittleres Molekulargewicht $M_w$ von mindestens 500.000 g/mol, besonders bevorzugt von mindestens 700.000 g/mol auf. Ebenfalls bevorzugt weisen die im geschäumten Träger enthaltenen Polymere ein gewichtsmittleres Molekulargewicht $M_w$ von maximal 1.700.000 g/mol auf. Die Polydispersität PD, also die Breite der Molmassenverteilung, die als Quotient des gewichtsmittleren Molekulargewichts $M_w$ und des zahlenmittleren Molekulargewichts $M_n$ ermittelt wird, beträgt für die im geschäumten Träger enthaltenen Polymere bevorzugt $10 \leq PD \leq 100$, besonders bevorzugt $20 \leq PD \leq 80$.

Sofern im Rahmen dieser Schrift die Begriffe Ober- und Unterseite benutzt werden, dienen diese lediglich zur lokalen Unterscheidung der beiden Oberflächen des geschäumten Trägers und sollen darüber hinaus keine weiteren Richtungsinformationen enthalten. Auf der "Oberseite" bedeutet also insbesondere auf einer der Seiten der entsprechenden Schicht, auf der Unterseite auf der anderen Seite der entsprechenden Schicht.

Die im Aufbau des erfindungsgemäßen Klebebandes verwendeten Polymere lassen sich hervorragend durch freie radikalische Polymerisation, bevorzugt in Lösung, gemäß dem Stand der Technik herstellen. Im Falle einer gegebenenfalls nachfolgenden Verarbeitung aus der Schmelze wird das Lösungsmittel nach der Polymerisation abgezogen.

Der geschäumte Träger wird bevorzugt aus der Schmelze zur Schicht ausgeformt. Auch die erfindungsgemäße Haftklebmasse wird bevorzugt aus der Schmelze geformt; da Haftklebmasseschichten üblicherweise nur in Schichtdicken bis zu 100 μm erzeugt werden, lässt sich die erfindungsgemäße Haftklebmasse auch aus Lösung beschichten und danach trocknen. Besonders bevorzugt werden alle im Aufbau des erfindungsgemäßen Klebebandes verwendeten Poly(meth)acrylatmassen in einem Hotmelt-Verfahren hergestellt, verarbeitet und beschichtet.

Zur Definition einer Schmelze eines amorphen Polymers wie beispielsweise eines Poly(meth)acrylats werden erfindungsgemäß die in F. R. Schwarzl, Polymermechanik: Struktur und mechanisches Verhalten von Polymeren, Springer Verlag, Berlin, 1990 auf den Seiten 89 ff. verwendeten Kriterien, nämlich dass die Viskosität die Größenordnung von etwa $\eta \approx 10^4$ Pa·s aufweist und die innere Dämpfung $\tan \delta$ Werte von $\geq 1$ erreicht, verwendet.

Sofern bestimmte Schichten des erfindungsgemäßen Klebebandes durch eine Beschichtung aus der Schmelze hergestellt werden, für eine homogene Verteilung thermischer Vernetzer zur Initiierung einer nachfolgenden thermischen Vernetzung eben diese Vernetzer aber vor der Beschichtung zugesetzt werden müssen, ergibt sich das Problem, dass die thermischen Vernetzer den hohen Temperaturen zur Erzeugung der Polymerschmelze ausgesetzt sind und daher bereits vor der Beschichtung eine unkontrollierte Polymervernetzung (sogenannte Vergelung) auslösen. Um diese Vergelung weitgehend zu unterdrücken, werden im Hotmelt-Verfahren üblicherweise sehr reaktionsträge Vernetzer eingesetzt, und zwar erst kurz vor der Beschichtung. Um aber dennoch nach Beschichtung befriedigende Vernetzungsergebnisse zu erzielen, werden bevorzugt sogenannte "Beschleuniger" beigemischt.

Auch für aus Lösung beschichtete Polymersysteme, die thermisch vernetzt werden sollen, kann der Einsatz von Beschleunigern sinnvoll sein und wird häufig realisiert. Der thermisch initiierte Vernetzungsvorgang wird üblicherweise mit der thermischen Entfernung des Lösungsmittels aus der aufgetragenen Schicht, also der Trocknung der Masseschicht, verbunden. Ein zu schnelles Entfernen des Lösungsmittels führt dabei zu einer schlecht ausgebildeten, ungleichmäßigen Schicht, da es beispielsweise zu Blasenbildung kommt. Aus diesem Grund wird die Trocknung bei moderaten Temperaturen durchgeführt. Um dennoch auch bei diesen Temperaturen eine gute Vernetzung, die hinreichend schnell verläuft, zu garantieren, können auch den Lösungsmittelsystemen Beschleuniger zugesetzt werden.

Eine Beschichtung aus Lösung wird häufig dann bevorzugt, wenn die Dicke der resultierenden Schichten nicht sehr groß ist, so dass eine erhöhte Viskosität der aufzubringenden Polymerlösung (im Vergleich zu einer weitgehend lösemittelfreien Schmelze) nicht mit signifikanten Problemen verbunden ist.

Als Beschleuniger oder auch beschleunigend wirkende Substanz werden insbesondere Protonenakzeptoren, Elektronenpaardonatoren (Lewisbasen) und/oder Elektronenpaarakzeptoren (Lewissäuren) eingesetzt. Beschleuniger sind solche Verbindungen oder Chemikalien, die Vernetzungsreaktionen insofern unterstützen, dass sie für eine hinreichende Reaktionsgeschwindigkeit sorgen. Dies geschieht insbesondere katalytisch (durch Aktivierung der Vernetzungsreaktion) und/oder durch Umwandlung funktioneller Gruppen der Vernetzersubstanzen oder der zu vernetzenden Makromoleküle zu funktionellen Gruppen, die im Sinne einer Verknüpfungsreaktion der Makromoleküle untereinander (Brückenbildung, Netzwerkbildung) oder mit weiteren funktionellen Gruppen reagieren können.

Die Beschleuniger selbst nehmen nicht an einer solchen Verknüpfungsreaktion teil (vernetzen selbst also nicht), können aber letztendlich in Form von Reaktionsprodukten oder von Fragmenten in das Netzwerk eingebunden oder an dieses geknüpft sein. Der Beschleuniger sorgt also für eine wesentliche Verbesserung der Kinetik der Vernetzungsreaktion.

Vernetzer hingegen sind solche Substanzen, die durch eigene funktionelle Gruppen an einer Reaktion, insbesondere einer Additions- oder Substitutionsreaktion, teilnehmen können, die über eine Brückenbildung zu einem Netzwerk führt. Weiterhin können funktionelle Gruppen enthalten sein, die - beispielsweise durch die genannte Beschleunigung oder durch andere Prozesse - im Rahmen der Vernetzungsreaktion in solche funktionellen Gruppen umgewandelt werden, die dann zu einer Brückenbildung zwischen den Makromolekülen der zu vernetzenden Polymere führen.

Die Vernetzungsreaktion in Abwesenheit des Beschleunigers würde bei ausgewählten Reaktionsparametern, hier insbesondere einer Temperatur, die unterhalb der Verarbeitungstemperatur der Polyacrylate liegt, nicht oder nur unzureichend langsam ablaufen. Viele Epoxide, die als Vernetzer eingesetzt werden, sind von Natur aus eher reaktionsträge, so dass sie ohne Beschleuniger zu keinen befriedigenden Vernetzungsergebnissen führen.

Protonendonoren, insbesondere Carbonsäuren bzw. Carbonsäuregruppen bzw. deren deprotonierte Derivate, sind im erfindungsgemäßen Sinne nicht zu den Beschleunigern zu zählen.

Die Anwesenheit von Beschleunigern in der erfindungsgemäßen Haftklebemasse und/oder im geschäumten Träger kann aber auch Nachteile aufweisen. So neigen insbesondere stickstoffhaltige Beschleuniger, wie beispielsweise Amine, durch Oxidationsprozesse mit der Zeit zur Vergilbung, so dass derartige Beschleunigersysteme insbesondere für transparente oder weiß gefärbte Haftklebmassen oder mehrschichtige Haftklebebänder schlecht oder gar nicht geeignet sind.

Beschleuniger, die salzartig sind oder Salze bilden (insbesondere basische Beschleuniger), wie etwa die vorgenannten Amine oder auch Zinkchlorid, können zu einer erhöhten Feuchtigkeitskapazität des Produktes führen, da Salze in der Regel hygroskopische Eigenschaften besitzen. Insbesondere für Haftklebmassen, die aufgrund des beabsichtigten Einsatzgebietes eine sehr hohe Feuchtwärmebeständigkeit aufweisen sollen, sind derartige Beschleuniger weniger geeignet.

Erfindungsgemäß angestrebt wird daher, die thermische Vernetzung insbesondere der erfindungsgemäßen Haftklebmasse(n), die in Luftkontakt stehen, mit Epoxycyclohexylderivaten zu erzielen, ohne dass Beschleuniger beigemischt sind. Die Abwesenheit bezieht sich dabei insbesondere auf extern zugesetzte (also nicht einpolymerisierte bzw. nicht in das Polymergerüst eingebaute) Beschleuniger; besonders bevorzugt sind aber weder extern zugesetzte noch einpolymerisierte, also gar keine Beschleuniger zugegen.

Die Beschaffenheit der Polymer-basierten Schichten und ihre physikalischen Eigenschaften (zum Beispiel Viskoelastizität, Kohäsion, elastischer Anteil) lassen sich durch die Art und den Grad der Vernetzung beeinflussen.

Bevorzugt ist die erfindungsgemäße Haftklebmasse durch mindestens ein Epoxycyclohexylderivat thermisch vernetzt. Besonders bevorzugt ist die erfindungsgemäße Haftklebmasse durch ein oder mehrere Epoxycyclohexylcarboxylate, insbesondere (3,4-Epoxycyclohexan)methyl-3,4-epoxycyclohexylcarboxylat (CAS 2386-87-0) thermisch vernetzt.

Der bzw. die Epoxycyclohexylderivat-Vernetzer sind in der Zusammensetzung zur Herstellung der erfindungsgemäßen Haftklebmasse bevorzugt in einer Gesamtmenge von bis zu 0,4 Gew.-Teilen, stärker bevorzugt von bis zu 0,3 Gew.-Teilen, jeweils bezogen auf 100 Gew.-Teile zu vernetzendes Polymer (sind der Haftklebmasse keine weiteren Additive zugemischt, dementsprechend auf 100 Gew.-Teile zu vernetzende Haftklebmasse), enthalten. Bei Vernetzermengen von mehr als 0,4 Gew.-Teilen auf 100 Gew.-Teile Polymer ist zunehmend mit Einbußen der Klebkraft zu rechnen und die Benetzung verschlechtert sich dramatisch. Ganz besonders bevorzugte Vernetzeranteile liegen beispielsweise im Bereich von 0,12 bis 0,30 Gew.-Teilen, insbesondere im Bereich von 0,15 bis 0,25 Gew.-Teilen (auf 100 Gew.-Teile Polymer).

Sofern die erfindungsgemäße Haftklebmasse einen oder mehrere Beschleuniger enthält, sind diese bevorzugt zu 0,1 bis 1,5 Gew.-Teilen, bevorzugt zu 0,15 bis 1,2 Gew.-Teilen, bezogen auf 100 Gew.-Teile zu vernetzendes Polymer, enthalten.

Auch der geschäumte Träger ist bevorzugt thermisch vernetzt, was zu einer sehr homogenen Ausbildung der viskoelastischen Schicht führt. Besonders bevorzugt ist der geschäumte Träger durch einen oder mehrere Glycidylether, insbesondere einen oder mehrere Polyglycidylether, ganz besonders bevorzugt durch Pentaerythrittetraglycidether (CAS 3126-63-4) thermisch vernetzt. Die Vernetzung erfolgt insbesondere in Kombination mit einem Amin, besonders bevorzugt mit Isophorondiamin (CAS 2855-13-2), als Beschleuniger. Der oder die Vernetzer sind in der Zusammensetzung zur Herstellung des geschäumten Trägers bevorzugt bis zu 1,0 Gew.-Teilen, stärker bevorzugt bis zu 0,8 Gew.-Teilen, bezogen auf 100 Gew.-Teile zu vernetzendes Polymer, enthalten. Ganz besonders bevorzugte Vernetzeranteile liegen beispielsweise im Bereich von 0,05 bis 0,6, insbesondere von 0,10 bis 0,5 Gew.-Teilen, bezogen auf 100 Gew.-Teile zu vernetzendes Polymer.

Der oder die Beschleuniger sind in der Zusammensetzung zur Herstellung des geschäumten Trägers bevorzugt zu 0,1 bis 1,5 Gew.-Teilen, besonders bevorzugt zu 0,15 bis 1,2 Gew.-Teilen, bezogen auf 100 Gew.-Teile zu vernetzendes Polymer, enthalten. Die Anwesenheit eines Aminbeschleunigers in der geschäumten Trägerschicht ist insbesondere bei Drei- oder Mehrschichtaufbauten unkritisch, da die Trägerschicht in diesen Fällen durch die außenliegenden Haftklebmassenschichten weitgehend von dem Einfluss oxidierender Substanzen wie etwa Luftsauerstoff abgeschirmt wird.

Die thermische Vernetzung der geschäumten Trägerschicht und der erfindungsgemäßen Haftklebmasseschicht(en) kann gleichzeitig durchgeführt werden, etwa wenn die Haftklebmasseschichten auf die noch nicht vernetze Trägerschicht beschichtet werden oder die Schichten in einem gemeinsamen Verfahren zusammen ausgeformt werden. Die einzelnen Schichten können aber auch in separaten Verfahren thermisch vernetzt werden, etwa wenn die Haftklebmasseschichten auf die bereits thermisch vernetzte geschäumte Trägerschicht beschichtet werden und dann thermisch vernetzt werden, oder wenn die Haftklebmasseschichten an einem anderen Ort ausgeformt und thermisch vernetzt werden - etwa auf einem temporären Träger wie einem Trennmaterial - und dann auf die bereits vernetzte geschäumte Trägerschicht aufkaschiert werden. Insbesondere für letzteres kann es vorteilhaft sein, die geschäumte Trägerschicht und/oder die Haftklebmasseschicht(en) chemisch und/oder physikalisch vorzubehandeln, beispielsweise durch Corona- und/oder Plasma-Behandlung und/oder reaktive Coronaund/oder reaktive Plasmabehandlung unter Verwendung von Gasen wie z.B. Stickstoff, Sauerstoff, Fluor und/oder weiteren und/oder durch Flammenbehandlung (Flame-Treatment).

Die Herstellung doppelseitiger, insbesondere dreischichtiger erfindungsgemäßer Klebebänder kann auch entsprechend der Darstellung für Drei- bzw. Mehrschichtsysteme in WO 2006 027 389 A1 erfolgen. Die dort beschriebenen Herstellungs- und Beschichtungsverfahren können analog auch für die Klebebänder dieser Schrift angewandt werden; der Offenbarungsgehalt der WO 2006 027 389 A1 soll daher als in die vorliegende Offenbarung explizit eingeschlossen gelten, gleiches gilt für die Darstellung der in WO 2006 027 389 A1 beschriebenen Produktaufbauten.

Eine Schäumung mit Mikroballons zur Herstellung der geschäumten Trägerschicht erfolgt bevorzugt gemäß den in den EP 2 414 143 A1 und DE 10 2009 015 233 A1 beschriebenen Verfahren.

Der geschäumte Träger ist bevorzugt als sehr hochviskose Flüssigkeit anzusehen, die unter Druckbelastung das Verhalten des Fließens (auch als "kriechen" bezeichnet) zeigt. Viskoelastische Massen in diesem Sinne weisen bevorzugt bereits durch die Schwerkraft, also unter Belastung durch ihr eigenes Gewicht, die Fähigkeit auf, mehr oder weniger langsam zu fließen und insbesondere auf einen Untergrund aufzufließen bzw. einen Untergrund zu benetzen. Mindestens aber findet dieser Effekt unter einer externen Druckeinwirkung statt. Eine Druckerhöhung, etwa durch Andrücken des Klebebandes auf einen Untergrund, kann dieses Verhalten deutlich beschleunigen.

Viskoelastische Massen im Sinne des vorstehend beschriebenen, bevorzugten geschäumten Trägers besitzen weiterhin die Fähigkeit, bei langsamer Krafteinwirkung die auf sie einwirkenden Kräfte zu relaxieren. Sie sind also in der Lage, die Kräfte in Schwingungen und/oder Verformungen, die auch - zumindest zum Teil - reversibel sein können, zu dissipieren, somit die einwirkenden Kräfte "abzupuffern" und eine mechanische Zerstörung durch die einwirkenden Kräfte bevorzugt zu vermeiden, zumindest aber zu verringern oder den Zeitpunkt des Eintretens der Zerstörung hinauszuzögern. Im Falle einer sehr schnell einwirkenden Kraft zeigen viskoelastische Massen üblicherweise ein elastisches Verhalten, also das Verhalten einer vollständig reversiblen Verformung, wobei Kräfte, die über das Elastizitätsvermögen der Masse hinausgehen, zu einem Bruch führen können.

Im Gegensatz hierzu stehen elastische Materialien, die auch bei langsamer Krafteinwirkung das beschriebene elastische Verhalten zeigen. Elastisches Verhalten wirkt sich grundsätzlich negativ auf die Benetzung aus. Daher ist es vorteilhaft, dass auch die erfindungsgemäßen Haftklebmassen trotz eines ausgeprägt elastischen Verhaltens unter schneller Kraftbeanspruchung insgesamt eher ein viskoelastisches Verhalten zeigen, sich insbesondere auf einer langen Zeitskala eher viskos wie eine Flüssigkeit verhalten und somit eine optimale und insbesondere schnelle Benetzung bewirken.

Geeignete Additive für eine oder mehrere Schichten des erfindungsgemäßen Klebebandes, insbesondere für die geschäumte Trägerschicht, sind Polymerhohlkugeln, Polymervollkugeln, Glashohlkugeln, Glasvollkugeln, keramische Hohlkugeln, keramische Vollkugeln und Kohlenstoffvollkugeln ("Carbon Micro Balloons").

Besonders bevorzugte Additive insbesondere im geschäumten Träger, aber auch in der erfindungsgemäßen Haftklebmasse, sind Schäumungsmittel. Bevorzugte Schäumungsmittel sind expandierbare polymere Mikrohohlkörper, die ggf. auch im voll ausexpandierten Zustand eingesetzt werden können. Besonders bevorzugt sind Mikrohohlkörper, die bei Wärme- und/oder anderer Energiezufuhr expandieren können, insbesondere gas- und/oderflüssigkeitsgefüllte Polymerkugeln, deren Hülle beispielsweise aus einem thermoplastischen Material wie Polymethylmethacrylat, Polyacrylnitril, PVDC oder Polystyrol besteht.

Die Beigabe von Kieselsäuren, vorteilhaft gefällter, mit Dimethyldichlorsilan oberflächenmodifizierter Kieselsäure, kann genutzt werden, um die Wärmescherfestigkeit der entsprechenden Polymer-basierten Schicht, insbesondere der geschäumten Trägerschicht, zu erhöhen. Derartige Kieselsäuren lassen sich auch hervorragend für transparente Produkte verwenden. Insbesondere für transparente Klebebänder ist es günstig, wenn die Kieselsäure zu einem Anteil von bis zu 15 Gew.-Teile, bezogen auf 100 Gew.-Teile Polymer, beigegeben wird.

Optional können in allen Schichten des erfindungsgemäßen Klebebandes, insbesondere in der erfindungsgemäßen Haftklebmasseschicht, Weichmacher enthalten sein. Bevorzugte Weichmacher sind (Meth)Acrylat-Oligomere, Phthalate, Cyclohexandicarbonsäureester (z.B. Hexamoll® DINCH, Fa. BASF, CAS 166412-78-8), wasserlösliche Weichmacher, Weichharze, Phosphate (z.B. Levagard® DMPP, Fa. Lanxess, CAS 18755-43-6) und Polyphosphate.

Ein erfindungsgemäßes Klebeband weist - insbesondere in seinen bevorzugten Ausführungsformen - zu den Klebebändern des Standes der Technik signifikante Unterschiede auf:

Durch die thermische Vernetzung weist das Haftklebeband kein Vernetzungsprofil durch seine Schichten hindurch auf. Viskoelastische Schichten sowie Haftklebmasseschichten, die durch aktinische Strahlung (ultraviolette Strahlung, Elektronenstrahlen) vernetzt wurden, zeigen ein Vernetzungsprofil durch die jeweilige vernetzte Schicht hindurch. Thermisch vernetzte Masseschichten zeigen dieses Verhalten nicht, da die Wärme gleichmäßig in die Schicht eindringen kann.

Die Abwesenheit der Beschleunigersubstanzen kann analytisch nachgewiesen werden. Systeme, die unter Beschleunigeranwesenheit vernetzt wurden, weisen Reste dieser Beschleuniger auf, wie etwa Stickstoffverbindungen im Falle von Aminen als Beschleuniger, Zinkchlorid oder dergleichen.

Zudem konnte nachgewiesen werden, dass mittels Epoxycyclohexylderivaten thermisch vernetzte erfindungsgemäße Polyacrylathaftklebmassen eine höhere Klebkraft aufweisen als die mittels anderer Vernetzer vernetzten Systeme. Diese Eigenschaft lässt sich wahrscheinlich auf eine spezielle Vernetzungsstruktur zurückführen. Dieser Unterschied wirkt sich auch auf die erfindungsgemäßen Klebebänder aus. Setzt man eine viskoelastische Poly(meth)acrylatschaumschicht ein und rüstet diese auf zumindest einer Seite mit der erfindungsgemäßen thermisch, insbesondere mit einem Epoxycyclohexylderivat, vernetzten Blendhaftklebmasse aus, so sind sowohl die Klebkräfte als auch das Benetzungsverhalten auf dieser Klebebandseite noch einmal höher bzw. besser als bei Systemen, die

- die entsprechende Haftklebmasse auf einem elastischen Polymerträger (herkömmliche Schaumträger wie beispielsweise PE) aufweisen oder
- den gleichen viskoelastischen Träger, aber eine andere, wenn auch an sich deutlich klebrigere, Haftklebmasse aufweisen.

Für die Klebkraft des Klebebandes spielt also nicht nur die außenliegende Haftklebmasse eine Rolle, sondern gleichfalls der geschäumte Träger, so dass für die hervorragenden Klebeeigenschaften das Gesamtsystem von Bedeutung ist. Eine bevorzugte Ausgestaltung des erfindungsgemäßen Klebebandes beinhaltet also die Kombination einer viskoelastischen Polyacrylatschaumschicht mit einer an sich (also beispielsweise mit elastischen Folienuntergründen als Träger) nicht stark haftklebrigen Haftklebmasseschicht, wobei durch Zusammenspiel dieser beiden Schichten das Klebverhalten gegenüber den Substraten optimiert wird. Es werden somit Klebkräfte und ein Benetzungsverhalten erzielt, welche häufig deutlich besser sind als bei an sich gut haftklebrigen Haftklebmassen, insbesondere solchen, die auf herkömmlichen elastischen Trägern vorliegen.

Ein erfindungsgemäßes Klebeband kann auf einer oder auch auf beiden Seiten mit einem Trennmaterial versehen sein. Bei den Trennmaterialien kann es sich beispielsweise um Silikone, Folien, silikonisierte Folien oder Papiere, oberflächenbehandelte Folien oder Papiere oder dergleichen handeln; im Wesentlichen also um sogenannte (Release) Liner.

Die erfindungsgemäßen Klebebänder können auch weitere Schichten umfassen, also eine Schichtenanzahl von größer als drei aufweisen. Es ist bevorzugt, wenn dabei die geschäumte Trägerschicht zumindest mittelbar, stärker bevorzugt unmittelbar mit einer erfindungsgemäßen Haftklebmasseschicht ausgerüstet ist, um die bereits dargestellte Verbesserung wesentlicher klebtechnischer Eigenschaften zu bewirken.

Die erfindungsgemäßen Haftklebebänder zeichnen sich dadurch aus, dass sie als sehr dicke Produkte bereitgestellt werden können, die zudem sehr hohe Klebkräfte besitzen. Solche Produkte finden beispielsweise Anwendung in der Baubranche, in der Automobilindustrie oder bei Verklebungen, mit denen Unebenheiten oder Hohlräume ausgeglichen werden sollen. Die erfindungsgemäßen Klebebänder können in üblichen Dicken von einigen bis einigen hundert Mikrometern, aber vorteilhaft auch in Dicken von mehr als 300 $\mu$m, beispielweise 500 $\mu$m oder mehr, 1000 $\mu$m oder mehr, 1500 $\mu$m oder mehr, 2000 $\mu$m oder mehr oder auch 3000 $\mu$m oder mehr hergestellt werden. Auch noch dickere Produkte sind realisierbar.

Aufgrund des guten Relaxationsverhaltens der geschäumten Trägerschicht sind die erfindungsgemäßen Klebebänder geeignet, Krafteinwirkungen wie mechanische Beanspruchungen, Stöße und dergleichen abzufangen und die Energie zu dissipieren. Die erfindungsgemäßen Klebebänder sind daher auch überall dort sehr geeignet, wo eine stoßund/oder erschütterungsdämpfende Wirkung gewünscht ist, etwa zur Verklebung zerbrechlicher Gegenstände, in Elektronik-Anwendungen und dergleichen. Besonders vorteilhaft lassen sich die erfindungsgemäßen Klebebänder einsetzen, wenn Materialien mit unterschiedlichen Wärmeausdehnungskoeffizienten miteinander verklebt werden sollen, da die erfindungsgemäßen Klebebänder durch ihre Relaxationseigenschaften Spannungen dissipieren können, die in der Wärme aus dem unterschiedlichen Ausdehnungsverhalten der miteinander verklebten Gegenstände bzw. Oberflächen resultieren. Herkömmliche Klebebänder neigen dabei häufig zum Versagen, das heißt es kommt zur Schwächung oder gar zum Bruch der Verklebungsstelle.

Es wurde festgestellt, dass auf die Klebstärke einer jeweiligen Seite des erfindungsgemäßen Klebebandes einerseits die Dicke der auf der betreffenden Klebebandseite vorgesehenen Haftklebmasseschicht, andererseits aber auch die Dicke der darunter liegenden geschäumten Trägerschicht einen Einfluss hat, der mehr oder weniger groß ausfallen kann.

Bevorzugt liegen die erfindungsgemäßen Haftklebmassen in einer Schichtdicke von bis zu 100 $\mu$m, stärker bevorzugt von bis zu 75 $\mu$m, besonders bevorzugt von bis zu 50 $\mu$m, vor. Die geschäumte Trägerschicht weist in Kombination damit bevorzugt eine Dicke von mindestens 400 $\mu$m, stärker bevorzugt von mindestens 900 $\mu$m, ganz besonders bevorzugt von mindestens 1400 $\mu$m, insbesondere von mindestens 1900 $\mu$m und ganz besonders bevorzugt von mindestens 2400 $\mu$m auf.

Erfindungsgemäße Klebebänder weisen auch eine gute Feuchtigkeits- und Feuchtwärmebeständigkeit auf. Sie besitzen eine sehr hohe Klebkraft; offenbar ist es also gelungen, die für gute Klebemassen erforderlichen Eigenschaften Fließverhalten und Kohäsion auf zwei unterschiedliche Schichten zu "verteilen" und somit eine bessere Abstimmung dieser Eigenschaften realisieren zu können. Die guten Fließeigenschaften der viskoelastischen Trägerschicht, insbesondere wenn diese auf Poly(meth)acrylat basiert, führen zu einem guten Auffließen des Gesamtproduktes auf das Substrat. Daher kann/können die Haftklebemassenschicht(en) mit einer relativ hohen Kohäsion versehen werden, ohne dass die Klebkraft des Klebebandes insgesamt nachteilig beeinflusst wird.

Die erfindungsgemäßen Klebebänder eignen sich besonders gut zur Verklebung und Befestigung von Zierleisten, Emblemen und Stoßfängern auf unpolaren Automobillacken. Falls benötigt, können diese vor der Verklebung noch mit einem Primer behandelt werden, um die Verklebungsfestigkeit noch weiter zu steigern.

Andere Anwendungsgebiete, für die sich die erfindungsgemäßen Klebebänder hervorragend eignen, sind zum Beispiel der Gebäudebau, der Gebäudeausbau, die Gebäudeausrüstung und allgemein der Architekturbereich, jeweils innen und/oder außen; der Heimwerkerbereich, der Modellbau, die Möbelherstellung, der Schiff- und der Flugzeugbau; die Elektronik- und die Elektroindustrie, beispielsweise für Unterhaltungselektronik, dort weiße Ware, braune Ware, aufgrund der guten Wärmebeständigkeit auch rote Ware; sowie die Verkehrssicherung, beispielsweise Straßenbeschilderung und dergleichen.

**Experimenteller Teil**

Messmethoden:

Feststoffgehalt (Messmethode A1):

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

K-Wert(nach FIKENTSCHER)(Messmethode A2):

Der K-Wert ist ein Maß für die durchschnittliche Molekülgröße hochpolymerer Stoffe. Zur Messung werden einprozentige (1g/100 ml) toluolische Polymerlösungen hergestellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.).

Gelpermeationschromatographie GPC (Messmethode A3):

Die Angaben des gewichtsmittleren Molekulargewichtes Mw und der Polydispersität PD in dieser Schrift beziehen sich auf die Bestimmung per Gelpermeationschromatographie. Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$, $10^3$ Å, ID 8,0 mm x 50 mm verwendet. Zur Auftrennung werden die Säulen des Typs PSS-SDV, 5 $\mu$, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung)].

Dichtebestimmung über den Masseauftrag und die Schichtdicke (Messmethode A4)

Das Raumgewicht beziehungsweise die Dichte $\rho$ einer beschichteten Selbstklebemasse wird über das Verhältnis vom Flächengewicht zu der jeweiligen Schichtdicke bestimmt:

$$\rho = \frac{m}{V} = \frac{MA}{d} \qquad [\rho] = \frac{[kg]}{[m^2] \cdot [m]} = \left[\frac{kg}{m^3}\right]$$

mit

MA = Masseauftrag/Flächengewicht (ohne Linergewicht) in [kg/m$^2$]
d = Schichtdicke (ohne Linerdicke) in [m]

Bei diesem Verfahren wird die Rohdichte erhalten.
Diese Dichtebestimmung eignet sich insbesondere zur Bestimmung der Gesamtdichte fertiger, auch mehrschichtiger, Produkte.

180° Klebkrafttest (Messmethode H1):

Ein 20 mm breiter Streifen einer auf Polyester als Schicht aufgetragenen Acrylathaftklebmasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180 ° vom Substrat abgezogen. Alle Messungen wurden bei Raumtemperatur durchgeführt. Die Messergebnisse sind in N/cm angegeben und sind gemittelt aus drei Messungen.

Scherstandzeit (Messmethode H2):

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm x 13 mm (Länge x Breite), wobei das Klebeband die Prüfplatte am Rand überragte (beispielsweise um 10 mm entsprechend oben angegebener Länge von 30 mm). Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigte.
Bei Raumtemperatur wurde ein Gewicht von z.B. 1 kg (10 N) an dem überstehenden Ende des Klebebandes befestigt; das jeweilige Gewicht ist in den Beispielen noch einmal aufgeführt. Die Messung wurde bei Normalklima (23 °C, 55 % Luftfeuchtigkeit) und bei 70 °C in einem Wärmeschrank durchgeführt.
Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

Mikroschertest (Messmethode H3)

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe x Breite = 13 mm x 10mm. Die Verklebungsstelle wird anschließend mit einer 2 kg-Stahlrolle bei einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 1000 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in $\mu$m angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min) x 100 / max].

90° Klebkraft Stahl - offene und abgedeckte Seite (Messmethode M1):

Die Bestimmung der Klebkraft Stahl erfolgte bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wurde vor der Messung gereinigt und konditioniert. Dazu wurde die Platte zunächst mit Aceton abgewischt und danach 5 Minuten an der Luft liegen gelassen, damit das Lösungsmittel abdampfen konnte.

Dreischichtverbund:

Die dem Prüfuntergrund abgewandte Seite des Dreischichtverbundes wurde dann mit einer 50 $\mu$m Aluminiumfolie abgedeckt, wodurch verhindert wurde, dass sich das Muster bei der Messung dehnt. Danach erfolgte das Anrollen des Prüfmusters auf den Stahluntergrund. Hierzu wurde das Tape mit einer 2 kg-Rolle fünfmal hin und her mit einer Aufrollgeschwindigkeit von 10 m/min überrollt. Unmittelbar nach dem Anrollen wurde die Stahlplatte in eine spezielle Halterung geschoben, die es ermöglicht, das Muster in einem Winkel von 90° senkrecht nach oben abzuziehen. Die Klebkraftmessung erfolgte mit einer Zwick-Zugprüfmaschine. Beim Applizieren der abgedeckten Seite auf die Stahlplatte wurde die offene Seite des Dreischichtverbundes zunächst gegen die 50 $\mu$m Aluminiumfolie kaschiert, dann das Trennmaterial entfernt und auf die Stahlplatte geklebt, analog angerollt und vermessen.

Die Messergebnisse beider Seiten, offen und abgedeckt, sind in N/cm angegeben und sind gemittelt aus drei Messungen.

Muster auf 23 um PET-Folie:

Das einseitige Prüfmuster wurde auf den Stahluntergrund aufgebracht und anschließend mit einer 2 kg-Rolle fünfmal mit einer Aufrollgeschwindigkeit von 10 m/min angepresst. Unmittelbar nach dem Anrollen wurde die Stahlplatte in eine spezielle Halterung geschoben, die es ermöglicht, das Muster in einem Winkel von 90° senkrecht nach oben abzuziehen. Die Klebkraftmessung erfolgte mit einer Zwick-Zugprüfmaschine. Die Messergebnisse sind in N/cm angegeben und sind gemittelt aus drei Messungen.

Scherstandzeit - offene und abgedeckte Seite (Messmethode M2):

Die Musterpräparation erfolgte in einem Prüfklima von 23 °C +/- 1 °C Temperatur und 50 % +/- 5 % rel. Luftfeuchte. Das Prüfmuster wurde auf 13 mm zugeschnitten und auf eine Stahlplatte geklebt. Die Verklebungsfläche betrug 20 mm x 13 mm (Länge x Breite). Vor der Messung wurde die Stahlplatte gereinigt und konditioniert. Dazu wurde die Platte zunächst mit Aceton abgewischt und danach 5 Minuten an der Luft liegen gelassen, damit das Lösungsmittel abdampfen konnte. Nach dem Verkleben wurde die offene Seite mit einer 50 $\mu$m Aluminiumfolie verstärkt und mit einer 2 kg-Rolle zweimal hin und her überrollt. Anschließend wurde eine Gurtschlaufe am überstehenden Ende des Dreischichtverbundes angebracht. Das Ganze wurde dann an einer geeigneten Vorrichtung aufgehängt und mit einem Gewicht von z.B. 1 kg (10 N) belastet; das Gewicht ist jeweils in den Beispielen angegeben. Die Aufhängvorrichtung war so beschaffen, dass das Gewicht die Probe in einem Winkel von 179°+/-1° belastet. Dadurch wurde sichergestellt, dass sich der Dreischichtverbund nicht von der Plattenunterkante abschälen konnte. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wurde die offene Seite zunächst mit der 50 µm Aluminiumfolie verstärkt, dann das Trennmaterial entfernt und auf die Prüfplatte analog der Beschreibung geklebt. Die Messung wurde bei Normalklima (23 °C, 55 % Luftfeuchtigkeit) durchgeführt.

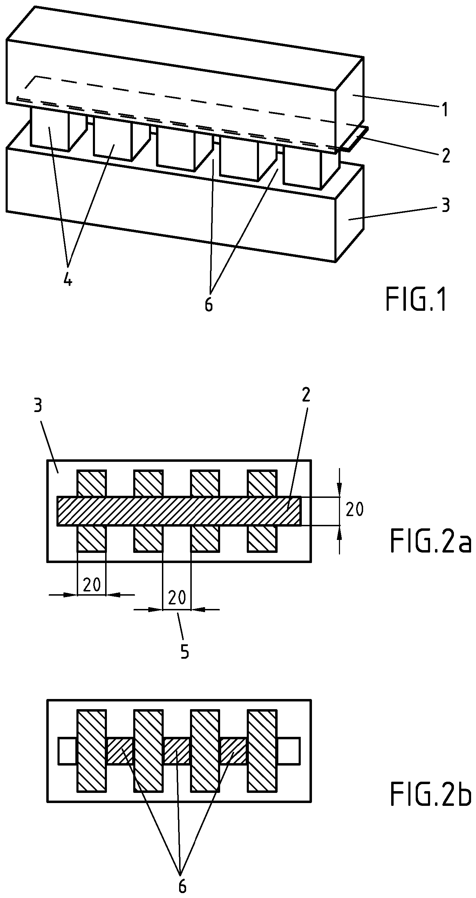

Stufen-Benetzungstestmit mit bigesteifen Substraten/ Rigid Rigid Wet-out Test (Messmethode M3, Fig. 1, 2a (Ansicht von oben) und 2b (Ansicht von unten)):

Die Musterpräparation erfolgte in einem Prüfklima von 23 °C +/- 1 °C Temperatur und 50 % +/- 5 % rel. Luftfeuchte. Vor der Messung wurde eine Polycarbonatplatte (1, Fig. 1) gereinigt und konditioniert. Dazu wurde die Platte zunächst mit Isopropanol abgewischt und danach 5 Minuten an der Luft liegen gelassen, damit das Lösungsmittel abdampfen konnte. Das Prüfmuster (2, Fig. 1 und 2a) wurde auf eine Breite von 20 mm zugeschnitten, mittig auf die Polycarbonatplatte geklebt und mit einer Rolle fünfmal hin und her überrollt. Das Gewicht der Rolle war an die Breite des Prüfmusters angepasst, sodass das Prüfmuster mit 2 kg/cm angepresst wurde; bei einer Breite von 20 mm wurde also ein 4 kg-Roller verwendet. Es wurde darauf geachtet, dass dabei das Prüfmuster die Platte gut benetzte. Im Anschluss wurde das verklebte Muster 24 h bei einem Prüfklima von 23 °C +/- 1 °C Temperatur und 50 % +/- 5 % rel. Luftfeuchte gelagert, um eine Relaxation des Klebebandes vor der weiteren Verarbeitung zu gewährleisten.

Eine zusätzliche Polycarbonatplatte (3, Fig. 1 und 2a) wurde mit Stufen (4, Fig. 1) mit einer definierten Höhe in einem definierten Abstand (5, Fig. 2a) von 20 mm beklebt und anschließend gemäß der zuvor beschriebenen Methode gereinigt und konditioniert. Es wurden Stufen mit Höhen von 20 und 100 µm verwendet und als Referenz ein Muster ohne Stufe vermessen. Das mit den Stufen beklebte Substrat (3, untere Schicht) wurde mit den Stufen nach oben zeigend auf einen festen Untergrund gelegt und das mit dem Prüfmuster versehene Substrat (1) langsam und gleichmäßig möglichst druckfrei auf den Stufen platziert (rigid-rigid-Applikation), sodass das Klebeband nicht aktiv in die Hohlräume (6, Fig. 1 und 2b) zwischen den Stufen gepresst wurde. Anschließend wurden die zusammengefügten Platten einmal mit einer Rolle mit einem definierten Gewicht gleichmäßig überrollt. Die Anpressgeschwindigkeit der Rolle lag konstant bei etwa 2,4 m/min.

Zur Ermittlung der Initialbenetzung wurden keine Stufe (Stufenhöhe 0 cm) und eine 1 kg-Rolle verwendet. Für den Stufentest wurden eine Stufenhöhe von 100 µm und eine 4 kg Rolle verwendet. In beiden Fällen wurde jeweils eine Dreifachbestimmung durchgeführt. Beim Vergleich unterschiedlicher Klebebänder wurde darauf geachtet, dass sie die gleiche Dicke aufwiesen.

Für beide Tests wurde jeweils nach dem Anrollen ein Foto von allen Flächen zwischen den Stufen (4) mit einer hohen Auflösung und definierter Beleuchtung in einer Fotobox aufgenommen, um anschließend mittels einer Bildbearbeitungssoftware über eine Graustufenanalyse die benetzte Fläche zu quantifizieren. Dies erfolgte über eine Image-Analyse, genauer gesagt über einen Auto-Threshold, der die Otsu-Analyse nutzt. Der Anteil der benetzten Fläche in Abhängigkeit von der Zeit wird in [%] abgegeben. Aus der Differenz wird die Entnetzung ebenfalls in [%] berechnet.

Kommerziell erhältliche, eingesetzte Chemikalien

| Chemische Verbindung | Handelsname | Hersteller | CAS-Nr |
|---|---|---|---|
| Bis-(4-*tert*-butylcyclohexyl) peroxydicarbonat | Perkadox® 16 | Akzo Nobel | 15520-11-3 |
| 2,2'-Azobis(2-methylpropionitril), AIBN | Vazo® 64 | DuPont | 78-67-1 |
| Acrylsäure AS $(T_g = 106°C)$ | - | Sigma-Aldrich | 79-10-7 |
| Butylacrylat BA $(T_g = -43°C)$ | - | BASF | 141-32-2 |
| 2-Ethylhexylacrylat EHA $(T_g = -58°C)$ | - | BASF | 103-11-7 |
| 2-Propylheptylacrylat PHA $(T_g = -69°C)$ | - | BASF | 149021-58-9 |
| Isodecylacrylat IDA $(T_g = -60°C)$ | - | Sartomer | 1330-61-6 |
| Heptadecanylacrylat iC17A (Isomerengemisch, $T_g = -72°C$) | - | BASF | - |
| Isobornylacrylat IBOA $(T_g = 94°C)$ | Visiomer® IBOA | Evonik | 5888-33-5 |
| Pentaerythrittetraglycidether | D.E.R.™ 749 | DOW | 3126-63-4 |

(fortgesetzt)

| Chemische Verbindung | Handelsname | Hersteller | CAS-Nr |
|---|---|---|---|
| 3,4-Epoxycyclohexylmethyl-3,4-epoxycyclohexancarboxylat | Uvacure® 1500 | Cytec Industries Inc. | 2386-87-0 |
| Isophorondiamin | Vestamin® IPD | Evonik | 2855-13-2 |
| Tetraglycidyl-meta-xyloldiamin | Erisys™ GA-240 | CVC | 63738-22-7 |
| Resorcinol bis(diphenyl Phosphat) | Reofos® RDP | Chemtura | 57583-54-7 |
| SBS (ca. 76 Gew.-% Zweiblock, Blockpolystyrolgehalt: 31 Gew.-%) | Kraton® D1118 ES | Kraton Polymers | 9003-55-8 |
| SBS (ca. 16 Gew.-% Zweiblock, Blockpolystyrolgehalt: 31 Gew.-%) | Kraton® D1101 | Kraton Polymers | 9003-55-8 |
| $\alpha$-Pinenharz (Erweichungstemperatur: ca. 115°C) | Dercolyte A 115 | DRT | 25766-18-1 |
| Kohlenwaserstoffharz (auf $C_5$-Basis, Erweichungspunkt (Ring & Ball) ca. 95°C) | Piccotac 1095 | Eastman | - |
| Mikroballons (MB) (trocken-unexpandierte Mikrosphären, Durchmesser 9 - 15 $\mu$m, Expansions-Starttemperatur 106 - 111 °C, TMA-Dichte $\leq$ 25 kg/m$^3$) | Expancel®051 DU 40 | Expancel Nobel Industries | |

## I. Herstellung der Haftklebmassen PA1 bis PA7

Im Folgenden wird die Präparation der Ausgangspolymere beschrieben. Die untersuchten Polymere wurden konventionell über eine freie radikalische Polymerisation in Lösung hergestellt.

Polyacrylathaftkleber 1 (PA1):

Ein für radikalische Polymerisationen konventioneller 300 L-Reaktor wurde mit 11,0 kg Acrylsäure, 27,0 kg Butylacrylat (BA), 62,0 kg 2-Propylheptylacrylat (PHA) sowie 72,4 kg Aceton/ Isopropanol (94:6) befüllt. Nach 45minütiger Durchleitung von Stickstoffgas unter Rühren wurde der Reaktor auf 58 °C hochgeheizt und 50 g Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Aceton/ Isopropanol (94:6) und nach 6 h mit 10,0 kg Aceton/ Isopropanol (94:6) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt und auf einen Feststoffgehalt von 30 % mit Aceton verdünnt. Molmassen mittels GPC (Messmethode A3): $M_n$ = 25.000 g/mol; $M_w$ = 1.010.000 g/mol. K-Wert: 50,3.

Polyacrylathaftkleber 2 (PA2):

Ein für radikalische Polymerisationen konventioneller 300 L-Reaktor wurde mit 11,0 kg Acrylsäure, 27,0 kg BA, 62,0 kg Isodecylacrylat (IDA) sowie 72,4 kg Aceton/ Isopropanol (94:6) befüllt. Nach 45minütiger Durchleitung von Stickstoffgas unter Rühren wurde der Reaktor auf 58 °C hochgeheizt und 50 g Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Aceton/ Isopropanol (94:6) und nach 6 h mit 10,0 kg Aceton/ Isopropanol (94:6) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt und auf einen Feststoffgehalt von 30 % mit Aceton verdünnt. Molmassen mittels GPC (Messmethode A3): $M_n$ = 31.400 g/mol; $M_w$ = 961.000 g/mol. K-Wert: 49,4.

Polyacrylathaftleber 3 (PA3):

Ein für radikalische Polymerisationen konventioneller 100 L-Glasreaktor wurde mit 4,0 kg Acrylsäure, 12,0 kg BA, 24,0 kg PHA und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt und auf einen Feststoffgehalt von 30 % mit Aceton verdünnt. Molmassen mittels GPC (Messmethode A3): $M_n$ = 24.500 g/mol; $M_w$ = 871.000 g/mol. K-Wert: 48,2.

Polyacrylathaftkleber 4 (PA4):

Ein für radikalische Polymerisationen konventioneller 100 L-Glasreaktor wurde mit 3,2 kg Acrylsäure, 8,0 kg BA, 28,8 kg IDA und 26,7 kg Aceton/ Isopropanol (94:6) befüllt. Nach 45minütiger Durchleitung von Stickstoffgas unter Rühren wurde der Reaktor auf 58 °C hochgeheizt und 30 g Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g Vazo® 67 hinzugegeben. Nach 4 und 8 h wurde mit jeweils 10,0 kg Aceton/ Isopropanol (94:6) Gemisch verdünnt. Zur Reduktion der Restinitiatoren wurden nach 8 und nach 10 h jeweils 90 g Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt und auf einen Feststoffgehalt von 30 % mit Aceton verdünnt. Molmassen mittels GPC (Messmethode A3): $M_n$ = 35.000 g/mol; $M_w$ = 1.020.000 g/mol. K-Wert: 52,9.

Vergleichsbeispiel Polyacrylathaftkleber 5 (PA5, Monomer EHA mit Tg > -60°C):

Ein für radikalische Polymerisationen konventioneller 100 L-Glasreaktor wurde mit 4,0 kg Acrylsäure, 12,0 kg BA, 24,0 kg EHA und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt und auf einen Feststoffgehalt von 30 % mit Aceton verdünnt. Molmassen mittels GPC (Messmethode A3): $M_n$ = 26.800 g/mol; $M_w$ = 809.000 g/mol. K-Wert: 46,3.

Vergleichsbeispiel Polyacrylathaftkleber 6 (PA6, Monomere PHA und IBOA (cyklisches Monomer)):

Ein für radikalische Polymerisationen konventioneller 100 L-Glasreaktor wurde mit 2,4 kg Acrylsäure, 12,0 kg Isobornylacrylat (IBOA), 25,6 kg PHA und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Bis-(4-tert-butylcyclohexyl)-peroxydicarbonat hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt und auf einen Feststoffgehalt von 30 % mit Aceton verdünnt. Molmassen mittels GPC (Messmethode A3): $M_n$ = 24.800 g/mol; $M_w$ = 980.000 g/mol. K-Wert: 50,1.

Vergleichsbeispiel Polyacrylathaftkleber 7 (PA7, Monomer iC17A mit Tg < -60°C):

Ein für radikalische Polymerisationen konventioneller 100 L-Glasreaktor wurde mit 11,0 kg Acrylsäure, 27,0 kg BA, 62,0 kg Heptadecanylacrylat (iC17A) sowie 72,4kg Aceton/ Isopropanol (94:6) befüllt. Nach 45minütiger Durchleitung von Stickstoffgas unter Rühren wurde der Reaktor auf 58 °C hochgeheizt und 50 g Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Aceton/ Isopropanol (94:6) und nach 6 h mit 10,0 kg Aceton/ Isopropanol (94:6) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt und auf einen Feststoffgehalt von 30 % mit Aceton verdünnt. Molmassen mittels GPC (Messmethode A3): $M_n$ = 27.000 g/mol; $M_w$ = 990.000 g/mol. K-Wert: 50,1.

Die Haftklebemassen PA1 - PA7 wurden gemäß Tabelle 1 noch in Lösung mit einem Styrolblockcopolymer und einem Kohlenwasserstoffklebharz gemischt und anschließend auf eine silikonisierte Trennfolie (50 $\mu$m Polyester) bzw. auf eine 23 $\mu$m dicke, geätzte PET-Folie beschichtet sowie getrocknet. Der Masseauftrag betrug 50 g/m² (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C).

Zur Messung der klebtechnischen Eigenschaften der erfindungsgemäßen Blendhaftklebmassenbeispiele B1 - B8 sowie der Vergleichsbeispiele VB9 -VB14 wurden die Messungen zunächst ohne den Polyacrylatschaumträger durchgeführt. Anhand der Ergebnisse in Tabelle 1 ist zu erkennen, dass die Beispiele B1 - B8 im Vergleich mit den nicht erfindungsgemäßen Blendhaftklebmassenformulierungen bessere Klebkräfte auf unpolaren Untergründen wie PE und eine höhere Wärmescherfestigkeit aufweisen; ansonsten aber vergleichbare Eigenschaften zeigen. Das Reinacrylatbeispiel VB14 hat deutliche Einbußen bei der Klebkraft auf PE.

## II Herstellung der Ausgangspolymere für den Polyacrylatschaum VT sowie die Haftklebebandbeispiele MT1 bis MT15

Basispolymer P

Ein für radikalische Polymerisationen konventioneller Reaktor wurde mit 30 kg EHA, 67 kg BA, 3 kg Acrylsäure, und 66 kg Aceton/Isopropanol (96:4) befüllt. Nach 45minütiger Durchleitung von Stickstoffgas unter Rühren wurde der Reaktor auf 58 °C hochgeheizt und 50 g Vazo® 67 hinzugegeben. Anschließend wurde das äußere Heizbad auf 75 °C erwärmt und die Reaktion konstant bei dieser Außentemperatur durchgeführt. Nach 1 h wurden erneut 50 g Vazo® 67 zugegeben und nach 4 h wurde mit 20 kg Aceton/Isopropanol-Gemisch (96:4) verdünnt. Nach 5 sowie nach 7 h wurde jeweils mit 150 g Perkadox® 16 nachinitiiert und mit 23 kg Aceton/Isopropanol-Gemisch (96:4) verdünnt. Nach 22 h Reaktionszeit wurde die Polymerisation abgebrochen und auf Raumtemperatur abgekühlt. Das Polyacrylat hat einen K-Wert von 75,1, einen Feststoffgehalt von 50,2 % und mittlere Molekulargewichte von $M_n$ = 91.900 g/mol und $M_w$ = 1.480.000 g/mol.

**Tabelle 1**: Beispiele B1 - B8 sowie Vergleichsbeispiele VB9 - VB15 - Klebtechnische Daten, Vernetzung mit 0,2 % Uvacure 1500

| Bsp. | PA | SBC | Harz | Klebkraft Stahl [N/cm] | Klebkraft PE [N/cm] | SSZ, 10 N, 23°C [Min] | SSZ, 10 N, 70°C [Min] | MSW max [$\mu$m] | elast. Anteil [%] |
|------|-----|-----|------|------|------|------|------|------|------|
| B1 | PA1 (60 %) | Kraton D1118 (20 %) | Dercolyte A115 (20 %) | 6,27 | 2,68 | > 10.000 | 569 (K) | 52 | 80 |
| B2 | PA1 (60 %) | Kraton D1101 (20 %) | Dercolyte A115 (20 %) | 5,97 | 2,8 | > 10.000 | 1.920 (K) | 38 | 63 |
| B3 | PA1 (62 %) | Kraton D1118 (18 %) | Dercolyte A115 (20 %) | 6,56 | 2,54 | > 10.000 | 1.250 (K) | 59 | 75 |
| B4 | PA2 (52,5 %) | Kraton D1118 (22,5 %) | Piccotac 1095 (25 %) | 7,25 | 2,23 | > 10.000 | 1.860 (K) | 89 | 75 |
| B5 | PA3 (80 %) | Kraton D1101 (10 %) | Piccotac 1095 (10 %) | 7,12 | 2,18 | > 10.000 | 2.800 (K) | 64 | 81 |
| B6 | PA3 (70 %) | Kraton D1101 (20 %) | Piccotac 1095 (10 %) | 5,82 | 2,36 | > 10.000 | 4.500 (A) | 88 | 75 |

(fortgesetzt)

| Bsp. | PA | SBC | Harz | Klebkraft Stahl [N/cm] | Klebkraft PE [N/cm] | SSZ, 10 N, 23°C [Min] | SSZ, 10 N, 70°C [Min] | MSW max [$\mu$m] | elast. Anteil [%] |
|---|---|---|---|---|---|---|---|---|---|
| B7 | PA4 (70 %) | Kraton D1101 (10 %) | Dercolyte A115 (20 %) | 7,23 | 3,22 | > 10.000 | 540 (K) | 120 | 55 |
| B8 | PA4 (60 %) | Kraton D1101 (20 %) | Dercolyte A115 (20 %) | 6,99 | 3,12 | > 10.000 | 1.820 (K) | 56 | 74 |
| VB9 | PA5 (60 %) | Kraton D1118 (20 %) | Dercolyte A115 (20 %) | 6,85 | 0,91 | > 10.000 | 400 (K) | 66 | 66 |
| VB10 | PA5 (60 %) | Kraton D1101 (20 %) | Dercolyte A115 (20 %) | 4,78 | 0,98 | > 10.000 | 20 (K) | 51 | 65 |
| VB11 | PA5 (62 %) | Kraton D1118 (18 %) | Dercolyte A115 (20 %) | 6,97 | 0,85 | > 10.000 | 560 (K) | 58 | 79 |
| VB12 | PA6 (60 %) | Kraton D1118 (20 %) | Dercolyte A115 (20 %) | 6,56 | 0,99 | > 10.000 | 1.100 (K) | 39 | 75 |
| VB13 | PA7 (60 %) | Kraton D1118 (20 %) | Dercolyte A115 (20 %) | 2,36 | 0,15 | 2.500 (K) | < 10 (K) | 166 | 67 |
| VB14 | PA2 | - | - | 5,80 | 1,00 | > 10.000 | 2.200 (K) | 470 | 95 |

Klebkraft Stahl und PE= Messmethode H1, SSZ = Scherstandszeiten 23° und 70°C = Messmethode H2 (K = Kohäsionsbruch, A = Adhäsionsbruch),
MSW = Mikroschertest = Messmethode H3, elast. Anteil = elastischer Anteil

Verfahren 1: Aufkonzentration / Herstellung der Schmelzhaftkleber:

Das Basispolymer P wird mittels Einschneckenextruder (Aufkonzentrationsextruder, Berstorff GmbH, Deutschland) weitestgehend vom Lösemittel befreit (Restlösemittelgehalt ≤ 0,3 Gew.-%). Die Parameter der Aufkonzentration des Basispolymers waren wie folgt: Die Drehzahl der Schnecke betrug 150 U/min, der Motorstrom 15 A und es wurde ein Durchsatz von 58,0 kg/h flüssig realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Hotmelts P lag bei ca. 115 °C. Der Feststoffgehalt betrug nach diesem Aufkonzentrationsschritt 99,8%.

Verfahren 2: Herstellung der erfindungsgemäßen Klebebänder, Abmischung mit dem Vernetzer-Beschleuniger-System für die thermischen Vernetzung und Beschichtung

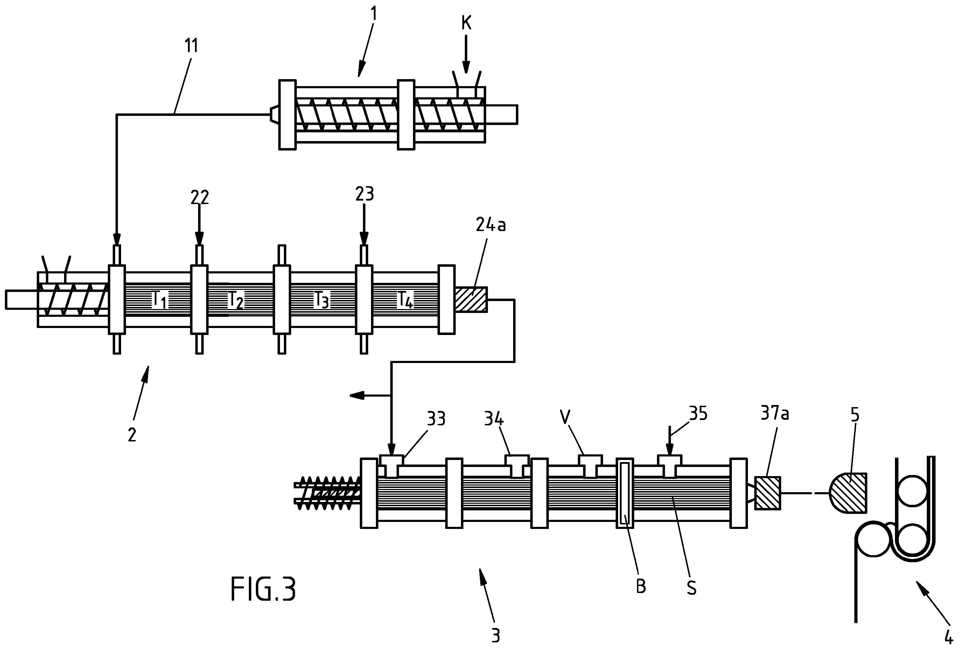

Die Schäumung fand in einer Versuchsanlage statt, die der Darstellung in Fig. 3 entspricht. Das Basispolymer P wurde gemäß Verfahren 1 in einem Fütterextruder 1 aufgeschmolzen und als Polymerschmelze über einen beheizbaren Schlauch 11 in einen Planetwalzenextruder 2 (PWE) der Firma ENTEX (Bochum) gefördert. Es wurde ein PWE mit vier unabhängig voneinander heizbaren Modulen T1, T2, T3, T4 eingesetzt. Über die Dosieröffnung 22 bestand die Möglichkeit, zusätzliche Additive oder Füllstoffe, wie z.B. Farbpasten, zuzuführen. An Punkt 23 wurdw der Vernetzer hinzugefügt. Alle Komponenten wurden zu einer homogenen Polymerschmelze gemischt.

Mittels einer Schmelzepumpe 24a und eines beheizbaren Schlauches 24b wurde die Polymerschmelze in einen Doppelschneckenextruder 3 (Firma BERSTORFF) überführt (Eingabeposition 33). An Position 34 wurde die Beschleunigerkomponente hinzugefügt. Anschließend wurde die gesamte Mischung in einem Vakuumdom V bei einem Druck von 175 mbar von allen Gaseinschlüssen befreit (Kriterium für Gasfreiheit siehe oben). Im Anschluss an die Vakuumzone befand sich auf der Schnecke ein Blister B, welcher einen Druckaufbau in dem darauffolgenden Segment S ermöglichte. Durch geeignete Steuerung der Extruderdrehzahl und der Schmelzepumpe 37a wurde in dem Segment S zwischen Blister B und Schmelzepumpe 37a ein Druck von größer 8 bar aufgebaut, an der Dosierstelle 35 die Mikroballonmischung (Mikroballons eingebettet in das Dispergierhilfsmittel gemäß der Angaben bei den Versuchsreihen) hinzugefügt und mittels eines Mischelements homogen in die Vormischung eingearbeitet. Die entstandene Schmelzmischung wurde in eine Düse 5 überführt.

Nach Verlassen der Düse 5, also nach Druckabfall, expandierten die eingearbeiteten Mikroballons, wobei durch den Druckabfall eine scherungsarme Abkühlung der Polymermasse erfolgte. Es entstand ein geschäumtes Trägermaterial. Dieses wurde anschließend beidseitig mit den unten aufgeführten Haftklebmassen beschichtet, die jeweils auf einem Trennmaterial, das nach dem Entfernen wiederverwendet werden kann (Prozessliner), zugeführt wurden. Der so erhaltene Dreischichtverbund wurde mittels eines Walzenkalanders 4 zur Bahn ausgeformt.

Um die Verankerung der Haftklebmassen aus den Beispielen B1 - B8 sowie VB9 - VB14 auf dem ausgeformten Polyacrylatschaum VT zu verbessern, wurden sowohl die Haftklebmassen als auch der Schaum mittels Corona vorbehandelt (Corona-Anlage der Firma VITAPHONE, Dänemark, 70 W·min/m$^2$). Die Corona-Behandlung führte nach der Herstellung der Dreischichtverbunde MT1 - MT14 zu einer verbesserten chemischen Anbindung an die Polyacrylatschaumträgerschicht.

Die Bahngeschwindigkeit bei Durchlaufen der Beschichtungsanlage betrug 30 m/min. Nach Verlassen des Walzenspaltes wurde ein Trennmaterial ausgedeckt und das fertige Dreischichtprodukt mit dem verbleibenden zweiten Trennmaterial aufgewickelt.

**Tabelle 2:** Polyacrylatschaum VT

| Beispiel | | | | VT |
|---|---|---|---|---|
| Komponenten | Basispolymer P<br>Expancel 051 DU 40<br>Polypox R16<br>IPDA<br>Reofos RDP | | [Gew.-%] | 97,8<br>1,5<br>0,139<br>0,144<br>0,41 |
| Aufbau | Dicke<br>Dichte | | [$\mu$m]<br>[kg/m$^3$] | 902<br>749 |
| Klebtechnische Eigenschaften | SSZ<br><br>Klebkraft Stahl | RT 20 N<br>70°C 10 N<br>sofort<br>3d<br>14d | [min]<br><br><br>[N/cm] | 1874<br>1282<br>24,5 A<br>33,4 A<br>35,1 A |
| Dichte: Messmethode A4, Klebkraft: Messmethode H2, SSZ (Scherstandszeit): Messmethode M2 | | | | |

Im Folgenden werden die Ergebnisse sowohl der erfindungsgemäßen Klebebänder, umfassend den Polyacrylatschaumträger VT mit den erfindungsgemäßen Blendhaftklebmassebeispielen B1 - B8 mit einem beidseitigen Masseauftrag von 50 g/m$^2$, als auch der Vergleichsbeispiele, umfassend den Polyacrylatschaumträger VT mit den nicht erfindungsgemäßen Haftklebmassebeispielen VB9 - VB14, ebenfalls mit einem beidseitigen Masseauftrag von 50 g/m$^2$, vorgestellt.

**Tabelle 3:** Klebkräfte auf Stahl und PE sowie das Aufziehverhalten der dreischichtigen Haftklebebänder MT1 - MT14 umfassend den Polyacrylatschaumträger VT mit einer Gesamtdicke von 1000 $\mu$m

| Bsp. | PSA | Klebkraft Stahl sofort, [N/cm] | | Klebkraft Stahl 8h, [N/cm] | Klebkraft Stahl 1d, [N/cm] | Klebkraft Stahl 3d, [N/cm] | Klebkraft PE 3d, [N/cm] |
|---|---|---|---|---|---|---|---|
| | | offene Seite | abgedeckte Seite | offene Seite | offene Seite | offene Seite | offene Seite |
| MT1 | B1 | 22,2 | 22,0 | 44 f.s. | 48 f.s. | 48 f.s. | 10,1 |
| MT2 | B2 | 30,5 | 30,7 | 46 f.s. | 51 f.s. | 50 f.s. | 10,3 |
| MT3 | B3 | 32,9 | 31,9 | 46 f.s. | 50 f.s. | 49 f.s. | 11,8 |

(fortgesetzt)

| Bsp. | PSA | Klebkraft Stahl sofort, [N/cm] | | Klebkraft Stahl 8h, [N/cm] | Klebkraft Stahl 1d, [N/cm] | Klebkraft Stahl 3d, [N/cm] | Klebkraft PE 3d, [N/cm] |
|---|---|---|---|---|---|---|---|
| | | offene Seite | abgedeckte Seite | offene Seite | offene Seite | offene Seite | offene Seite |
| MT4 | B4 | 25,7 | 25,7 | 44 f.s. | 48 f.s. | 48 f.s. | 12,1 |
| MT5 | B5 | 30,4 | 30,2 | 48 f.s. | 47 f.s. | 48 f.s. | 11,6 |
| MT6 | B6 | 32,5 | 32,6 | 47 f.s. | 50 f.s. | 51 f.s. | 11,2 |
| MT7 | B7 | 22,5 | 22,0 | 46 f.s. | 47 f.s. | 46 f.s. | 12,5 |
| MT8 | B8 | 31,9 | 31,9 | 48 f.s. | 49 f.s. | 49 f.s. | 12,6 |
| MT9 | VB9 | 21,8 | 21,7 | 35,6 | 44 f.s. | 48 f.s. | 9,8 |
| MT10 | VB10 | 29,7 | 29,5 | 34,7 | 48 f.s. | 48 f.s. | 7,5 |
| MT11 | V11 | 22,1 | 22,2 | 37,2 | 46 f.s. | 47 f.s. | 6,8 |
| MT12 | VB9 | 29,1 | 28,9 | 38,1 | 44 f.s. | 44.f.s. | 9,2 |
| MT13 | VB13 | 12,3 | 12,7 | 15,6 | 22,1 | 22,2 | 2,6 |
| MT14 | VB14 | 11,5 | 10,1 | 45 f.s. | 45 f.s. | 44 f.s. | 12,6 |
| PSA = (Blend)Haftklebemasseformulierung, Klebkraft Stahl = Messmethode M1 (f.s. = foam split, Schaumspalten) | | | | | | | |

Die Vergleichsbeispiele MT9 - MT13 in Tabelle 3 zeigen im Vergleich zu den Beispielen mit den erfindungsgemäßen Blendhaftklebmasseformulierungen MT1 - MT8 niedrigere Klebkräfte auf PE sowie ein langsameres Aufziehverhalten bei vergleichbaren Sofortklebkräften auf Stahl. Die Verwendung einer Reinacrylathaftklebmasse als äußere Schicht (MT14) resultiert in deutlich niedrigeren Sofortklebwerten, jedoch ist das Aufziehverhalten vergleichbar mit dem der Blends.

In Tabelle 4 sind sowohl die Scherstandzeiten als auch die mittels Rigid Wet out Test erzielten Benetzungs-bzw. Entnetzungsergebnisse unter Belastung dargestellt. Es zeigt sich, dass bis auf Vergleichsbeispiel MT13 die Kohäsion in allen Fällen vergleichbar ist. Im Beispiel MT13 wird das Polyacrylat PA7 mit dem mehrfachverzweigten Acrylatcomonomer iC17 eingesetzt, welches generell schlechte Ergebnisse hinsichtlich der Scherfestigkeit ergibt. Die erfindungsgemäßen Beispiele MT1 - MT8 zeigen außer in einem Fall mit minimaler Entnetzung alle eine weiter fortschreitende Benetzung nach drei Tagen. Alle Blendhaftklebmasseformulierungen, in denen die nicht erfindungsgemäßen Polyacrylate PA5 - PA7 verwendet wurden, zeigen hingegen eine deutliche Entnetzung. Dies zeigt sich auch im Beispiel MT14, in dem ein Reinacrylat verwendet wurde.

**Tabelle 4:** Scherstandszeiten sowie Rigid Rigid Wet-out Test der dreischichtigen Haftklebebänder MT1 - MT14 umfassend den Polyacrylatschaumträger VT mit einer Gesamtdicke von 1000 $\mu$m

| Bsp. | SSZ, 10 N, 23°C [Min] | SSZ, 10 N, 70°C [Min] | Benetzung 100 $\mu$m, 4 kg, 1d, [%] | Benetzung 100 $\mu$m, 4 kg, 3d, [%] | Entnetzung 100 $\mu$m, 4 kg, Differenz 3d - sofort, [%] |
|---|---|---|---|---|---|
| | offene Seite | offene Seite | offene Seite | offene Seite | offene Seite |
| MT1 | > 10.000 | 4.500 (A) | 90 | 90 | 0 |
| MT2 | > 10.000 | 4.200 (A) | 85 | 91 | 6 |
| MT3 | > 10.000 | 5.500 (K) | 82 | 82 | 0 |
| MT4 | > 10.000 | 3.900 (K) | 86 | 88 | 2 |
| MT5 | > 10.000 | 4.110 (K) | 91 | 93 | 2 |
| MT6 | > 10.000 | 5.300 (K) | 85 | 92 | 7 |
| MT7 | > 10.000 | 5.090 (A) | 88 | 89 | 1 |

(fortgesetzt)

| Bsp. | SSZ, 10 N, 23°C [Min] | SSZ, 10 N, 70°C [Min] | Benetzung 100 $\mu$m, 4 kg, 1d, [%] | Benetzung 100 $\mu$m, 4 kg, 3d, [%] | Entnetzung 100 $\mu$m, 4 kg, Differenz 3d - sofort, [%] |
|---|---|---|---|---|---|
| | offene Seite | offene Seite | offene Seite | offene Seite | offene Seite |
| MT9 | > 10.000 | 4.750 (K) | 87 | 86 | -1 |
| MT6 | > 10.000 | 4.900 (A) | 93 | 52 | -41 |
| MT7 | > 10.000 | 4.200 (A) | 89 | 61 | -28 |
| MT8 | > 10.000 | 1.450 (K) | 82 | 42 | -40 |
| MT9 | > 10.000 | 3.500 (K) | 92 | 63 | -29 |
| MT10 | > 10.000 | 4.010 (A) | 82 | 56 | -26 |
| MT11 | > 10.000 | 2.800 (A) | 81 | 54 | -27 |
| MT12 | > 10.000 | 5.000 (K) | 75 | 22 | -53 |
| MT13 | 4.200 (K) | 200 (K) | 85 | 12 | -73 |
| MT14 | > 10.000 | > 10.000 | 82 | 72 | -15 |
| SSZ (Scherstandszeit): Messmethode M2 (A = Adhäsionsbruch, K = Kohäsionsbruch), Rigid Wet out Test: Messmethode M3 | | | | | |

**Patentansprüche**

1. Haftklebmasse, enthaltend

   a) zu mindestens 50 Gew.-%, bezogen auf das Gesamtgewicht der Haftklebmasse, mindestens ein Polymer A, dessen Monomerbasis die folgenden Monomere umfasst:

   a1) 2-Propylheptylacrylat und/oder Isodecylacrylat;
   a2) mindestens einen (Meth)Acrylsäureester, dessen Alkoholkomponente ein linearer $C_1$-$C_{18}$-Alkohol zugrundeliegt;
   a3) Acrylsäure;

   b) zu mindestens 5 Gew.-%, bezogen auf das Gesamtgewicht der Haftklebmasse, mindestens einen Synthesekautschuk; und
   c) zu mindestens 10 Gew.-%, bezogen auf das Gesamtgewicht der Haftklebmasse, mindestens ein klebkraftverstärkendes Harz.

2. Haftklebmasse gemäß Anspruch 1, **dadurch gekennzeichnet, dass** die Haftklebmasse durch mindestens ein Epoxycyclohexylderivat thermisch vernetzt ist.

3. Haftklebmasse gemäß mindestens einem der vorstehenden Ansprüche, **dadurch gekennzeichnet, dass** die Haftklebmasse mindestens eine Poly(meth)acrylat- und mindestens eine Synthesekautschukphase umfasst.

4. Haftklebmasse gemäß Anspruch 3, **dadurch gekennzeichnet, dass** die Synthesekautschukphase in der Poly(meth)acrylatphase dispergiert vorliegt.

5. Haftklebmasse gemäß mindestens einem der vorstehenden Ansprüche, **dadurch gekennzeichnet, dass** das mindestens eine klebkraftverstärkende Harz ein Kohlenwasserstoffharz ist.

6. Haftklebmasse gemäß mindestens einem der vorstehenden Ansprüche, **dadurch gekennzeichnet, dass** das mindestens eine klebkraftverstärkende Harz inkompatibel mit jeder Poly(meth)acrylatphase der Haftklebmasse ist.

**7.** Klebeband, umfassend einen geschäumten Träger und eine Haftklebmasse gemäß mindestens einem der vorstehenden Ansprüche.

**8.** Klebeband gemäß Anspruch 7, **dadurch gekennzeichnet, dass** der geschäumte Träger einen syntaktischen Polymerschaum aufweist.

**9.** Klebeband gemäß Anspruch 8, **dadurch gekennzeichnet, dass** der syntaktische Polymerschaum zu mindestens 50 Gew.-%, bezogen auf das Gesamtgewicht des Schaums, ein oder mehrere Poly(meth)acrylate enthält.

**10.** Klebeband gemäß mindestens einem der Ansprüche 7 bis 9, **dadurch gekennzeichnet, dass** die Haftklebmasse auf mindestens eine Seite des geschäumten Trägers kaschiert ist.

**11.** Klebeband gemäß mindestens einem der Ansprüche 7 bis 10, **dadurch gekennzeichnet, dass** der geschäumte Träger zu mindestens 50 Gew.-%, bezogen auf das Gesamtgewicht des Schaums, mindestens ein Poly(meth)acrylat B enthält, das auf die folgende Monomerzusammensetzung zurückgeführt werden kann:

> b1) 65 bis 97 Gew.-% Ethylhexylacrylat und/oder Butylacrylat,
> b2) 0 bis 30 Gew.-% Methylacrylat,
> b3) 3 bis 15 Gew.-% Acrylsäure.

**12.** Klebeband gemäß mindestens einem der Ansprüche 7 bis 11, **dadurch gekennzeichnet, dass** der geschäumte Träger thermisch vernetzt ist.

**13.** Klebeband gemäß mindestens einem der Ansprüche 7 bis 12, **dadurch gekennzeichnet, dass** auf beiden Seiten des geschäumten Trägers eine Haftklebmasse gemäß mindestens einem der Ansprüche 1 bis 6 angeordnet ist.

**Claims**

**1.** Pressure-sensitive adhesive comprising

> a) at least 50 wt%, based on the total weight of the pressure-sensitive adhesive, of at least one polymer A whose monomer basis comprises the following monomers:
>
> > a1) 2-propylheptyl acrylate and/or isodecyl acrylate;
> > a2) at least one (meth)acrylic ester having an alcohol component based on a linear $C_1$-$C_{18}$ alcohol;
> > a3) acrylic acid;
>
> b) at least 5 wt%, based on the total weight of the pressure-sensitive adhesive, of at least one synthetic rubber; and
> c) at least 10 wt%, based on the total weight of the pressure-sensitive adhesive, of at least one peel adhesion-reinforcing resin.

**2.** Pressure-sensitive adhesive according to Claim 1, **characterized in that** the pressure-sensitive adhesive is thermally crosslinked by at least one epoxycyclohexyl derivative.

**3.** Pressure-sensitive adhesive according to at least one of the preceding claims, **characterized in that** the pressure-sensitive adhesive comprises at least one poly(meth)acrylate phase and at least one synthetic rubber phase.

**4.** Pressure-sensitive adhesive according to Claim 3, **characterized in that** the synthetic rubber phase is in dispersion in the poly(meth)acrylate phase.

**5.** Pressure-sensitive adhesive according to at least one of the preceding claims, **characterized in that** the at least one peel adhesion-reinforcing resin is a hydrocarbon resin.

**6.** Pressure-sensitive adhesive according to at least one of the preceding claims, **characterized in that** the at least one peel adhesion-reinforcing resin is incompatible with each poly(meth)acrylate phase of the pressure-sensitive adhesive.

7. Adhesive tape comprising a foamed carrier and a pressure-sensitive adhesive according to at least one of the preceding claims.

8. Adhesive tape according to Claim 7, **characterized in that** the foamed carrier comprises a syntactic polymer foam.

9. Adhesive tape according to Claim 8, **characterized in that** the syntactic polymer foam comprises at least 50 wt%, based on the total weight of the foam, of one or more poly(meth)acrylates.

10. Adhesive tape according to at least one of Claims 7 to 9, **characterized in that** the pressure-sensitive adhesive is laminated on at least one side of the foamed carrier.

11. Adhesive tape according to at least one of Claims 7 to 10, **characterized in that** the foamed carrier comprises at least 50 wt%, based on the total weight of the foam, of at least one poly(meth)acrylate B which can be traced back to the following monomer composition:

   b1) 65 to 97 wt% of ethylhexyl acrylate and/or butyl acrylate,
   b2) 0 to 30 wt% of methyl acrylate,
   b3) 3 to 15 wt% of acrylic acid.

12. Adhesive tape according to at least one of Claims 7 to 11, **characterized in that** the foamed carrier is thermally crosslinked.

13. Adhesive tape according to at least one of Claims 7 to 12, **characterized in that** on both sides of the foamed carrier there is a pressure-sensitive adhesive according to at least one of Claims 1 to 6.


**Revendications**

1. Masse autoadhésive, contenant

   a) au moins 50 % en poids, par rapport au poids total de la masse autoadhésive, d'au moins un polymère A, dont la base monomérique comprend les monomères suivants :

      a1) acrylate de 2-propylheptyle et/ou acrylate d'isodécyle ;
      a2) au moins un ester d'acide (méth)acrylique, dont le composant de type alcool est à base d'un alcool linéaire en $C_{1-18}$ ;
      a3) acide acrylique ;

   b) au moins 5 % en poids, par rapport au poids total de la masse autoadhésive, d'au moins un caoutchouc de synthèse ; et
   c) au moins 10 % en poids, par rapport au poids total de la masse autoadhésive, d'au moins une résine améliorant l'adhérence.

2. Masse autoadhésive selon la revendication 1, **caractérisée en ce que** la masse autoadhésive est réticulée thermiquement par au moins un dérivé de type époxycyclohexyle.

3. Masse autoadhésive selon au moins l'une des revendications précédentes, **caractérisée en ce que** la masse autoadhésive comprend au moins une phase de poly(méth)acrylate et au moins une phase de caoutchouc de synthèse.

4. Masse autoadhésive selon la revendication 3, **caractérisée en ce que** la phase de caoutchouc de synthèse est présente dispersée dans la phase de poly(méth)acrylate.

5. Masse autoadhésive selon au moins l'une des revendications précédentes, **caractérisée en ce que** l'au moins une résine améliorant l'adhérence est une résine d'hydrocarbure.

6. Masse autoadhésive selon au moins l'une des revendications précédentes, **caractérisée en ce que** l'au moins une résine améliorant l'adhérence est incompatible avec chaque phase de poly(méth)acrylate de la masse autoadhésive.

**7.** Ruban adhésif, comprenant un support moussé et une masse autoadhésive selon au moins l'une des revendications précédentes.

**8.** Ruban adhésif selon la revendication 7, **caractérisé en ce que** le support moussé présente une mousse de polymère syntactique.

**9.** Ruban adhésif selon la revendication 8, **caractérisé en ce que** la mousse de polymère syntactique contient au moins 50 % en poids, par rapport au poids total de la mousse, d'un ou plusieurs poly(méth)acrylates.

**10.** Ruban adhésif selon au moins l'une des revendications 7 à 9, **caractérisé en ce que** la masse autoadhésive est doublée sur au moins un côté du support moussé.

**11.** Ruban adhésif selon au moins l'une des revendications 7 à 10, **caractérisé en ce que** le support moussé contient au moins 50 % en poids, par rapport au poids total de la mousse, d'au moins un poly(méth)acrylate B, qui peut être ramené à la composition de monomères suivante :

> b1) 65 à 97 % en poids d'acrylate d'éthylhexyle et/ou d'acrylate de butyle,
> b2) 0 à 30 % en poids d'acrylate de méthyle,
> b3) 3 à 15 % en poids d'acide acrylique.

**12.** Ruban adhésif selon au moins l'une des revendications 7 à 11, **caractérisé en ce que** le support moussé est réticulé thermiquement.

**13.** Ruban adhésif selon au moins l'une des revendications 7 à 12, **caractérisé en ce qu'**une masse autoadhésive selon au moins l'une des revendications 1 à 6 est disposée sur les deux côtés du support moussé.

FIG.1

FIG.2a

FIG.2b

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2305389 A2
- EP 2617789 A1
- WO 2014081623 A2
- US 20110244230 A1
- EP 2690147 A2
- EP 2474587 A1
- EP 3178856 A1
- WO 2006027389 A1
- EP 2414143 A1
- DE 102009015233 A1

**In der Beschreibung aufgeführte Nicht-Patentliteratur**

- **C. DONKER.** *PSTC Annual Technical Seminar, Proceedings,* Mai 2001, 149-164
- **F. R. SCHWARZL.** Polymermechanik: Struktur und mechanisches Verhalten von Polymeren. Springer Verlag, 1990, 89
- *CHEMICAL ABSTRACTS,* 2386-87-0
- *CHEMICAL ABSTRACTS,* 3126-63-4
- *CHEMICAL ABSTRACTS,* 2855-13-2
- *CHEMICAL ABSTRACTS,* 166412-78-8
- *CHEMICAL ABSTRACTS,* 18755-43-6